(19) Europäisches Patentamt
European Patent Office
Office européen des brevets

(11) **EP 1 248 473 A1**

(12) **EUROPEAN PATENT APPLICATION**
published in accordance with Art. 158(3) EPC

(43) Date of publication:
**09.10.2002 Bulletin 2002/41**

(51) Int Cl.⁷: **H04N 13/04**, G02B 27/22, G09F 9/00, G09F 9/30

(21) Application number: **00974970.6**

(22) Date of filing: **14.11.2000**

(86) International application number:
**PCT/JP00/08003**

(87) International publication number:
**WO 01/037579 (25.05.2001 Gazette 2001/21)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **15.11.1999 JP 32438699**
**28.01.2000 JP 2000024673**

(71) Applicant: **Hit Design Ltd.**
**Hadano-shi, Kanagawa 257-0024 (JP)**

(72) Inventor: **MATSUMOTO, Kazumi**
**Hadano-shi, Kanagawa 257-0024 (JP)**

(74) Representative: **Winkler, Andreas, Dr.**
**FORRESTER & BOEHMERT**
**Pettenkoferstrasse 20-22**
**80336 München (DE)**

(54) **3-D IMAGE DISPLAY METHOD AND 3-D IMAGE DISPLAY DEVICE USING THE METHOD**

(57) A 3-D image displaying method and a 3-D image display unit which need no special glasses, can easily provide a multi-viewpoint system, allows changeover to the 2-D image display, and can provide a small-depth configuration. A light source means (200) on which, assuming that the number of parallax directions is p, and q and r meet a relational expression, p = q × r, a plurality of unit light emitting blocks are arranged in the form of a matrix, each having light emitting units disposed in respective q partial regions belonging to mutually different rows and mutually different columns of a matrix of q rows and q columns; a horizontal cylindrical lens array (300); and an image display device (400) are provided. A light flux radially projected from each light emitting unit (211) is passed through a display surface, being expanded to a breadth of at least p pixels in the horizontal section, and in the vertical section, the lens function of a horizontal cylindrical lens array (300) focuses the light flux every (n × q) pixels on the display surface, thereafter causing it to be diffused in the vertical plane, which results in formation of an observing region where a different horizontal parallax image is observed in each of vertical zones which are adjacent to one another.

FIG. 8

EP 1 248 473 A1

**Description**

FIELD OF THE INVENTION

The present invention relates to a 3-D image display unit using a 3-D image displaying method for displaying, toward a prescribed observing region, a stereoscopic image giving only horizontal parallaxes and no vertical ones.

BACKGROUND

3-D image display units for computers and television receivers preferably meet the requirements, such as (1) no special glasses must be needed for observation, (2) a highly fine 3-D images must be able to be observed in a wide observing region, (3) an image quality which is equivalent to that can be obtained with a display unit specialized for 2-D image must be provided, and (4) they must be able to be configured as a small-depth unit, such as a notebook type one and a wall-mounting type one.

The 3-D image display units based on the lenticular system and the parallax barrier system that have already been put to practical use require no special glasses, and can be configured as a small-depth unit, therefore, they meet (1) and (4) of the above requirements. However, they meet the requirements (2) and (3) extremely unsatisfactorily, having not reached the practical use stage.

Then, various proposals for meeting the requirements (2) and (3) have been offered. As a 3-D image displaying method which allows observation over a wide region as required in (2), the multi-viewpoint method, the head tracking method, and the like have been offered. The multi-viewpoint method always displays a number of parallax images toward multiple directions, while the head tracking method moves the 3-D image observing region, following up the movement of the observer.

However, the prior art based on the multi-viewpoint method that uses a lenticular sheet or a parallax barrier displays a synthetic image in the form of vertical stripes that is as a result of the parallax images which number corresponds to that of parallax directions each being decomposed into vertical stripes, and the vertical stripes being alternately arranged in the prescribed order to be synthesized into one image, therefore, there has been a problem of that, as the number of parallax directions is increased, the resolution of the displayed image is substantially lowered. To solve this problem, US Patent No. 5,036,385 (Japanese Laid-open Publication No. 2 (1994)-284135) discloses a higher precision art for 3-D image display by time sharing that combines a light source array in the form of vertical stripes that periodically goes on and off, with a transmission type display device which renews the displayed image in synchronization with that light source array.

On the other hand, as a proposal for higher precision art which is not by time sharing, Japanese Patent Application No. 11 (1999)-218582 by the present inventor has been offered. This has achieved a highly fine multi-viewpoint 3-D image display by adopting the pixel arrangement in the form of a matrix rather than the pixel arrangement in the form of stripes, noting the arrangement structure of the pixels for a display device.

As a 3-D image displaying method which allows switchover to a highly fine 2-D image display, as required in (3), a system which can switch over the light emitted from the respective pixels on the display screen from the light having a directivity to the diffused light having no directivity has been disclosed in Japanese Laid-open Publication No. 5 (1993)-284542 and US Patent No. 5,410,345.

The state of the art at present is such that, when a TN (twisted nematic) liquid crystal is used, it takes a few milliseconds to renew the displayed image at a minimum, therefore, with the higher precision art for 3-D image display by time sharing as disclosed in US Patent No. 5,036,385 (Japanese Laid-open Publication No. 2 (1994)-284135), a sufficiently large number of parallax directions cannot be provided, and thus the configuration is expensive for the number of parallax directions.

The method as disclosed in Japanese Patent Application No. 11 (1999)-218582 by the present inventor is excellent in the principle, however, requires a complicated prism sheet, resulting in the device being difficult to be manufactured.

On the other hand, with the head tracking method as proposed in Japanese Laid-open Publication No. 10 (1998)-78563, etc., not only observation by many persons is difficult in the principle, but also it is indispensable to provide a device for detection of the position of the observer, and a device for controlling the directivity of the light carrying parallax image information, resulting in the cost being high, when compared to that of the non-head tracking type 3-D image display unit.

The method as disclosed in Japanese Laid-open Publication No. 5 (1993)-284542), US Patent No. 5,410,345, etc. as a 3-D image displaying method which allows switchover to a highly fine 2-D image display, as required in (3), makes the construction and size more intricate and larger than those of the display unit specialized for 3-D image display, which results in the cost being higher.

SUMMARY OF THE INVENTION

The present invention has been developed in consideration of these problems encountered with the prior art, and the purpose of the present invention is to offer a 3-D image displaying method which needs no special glasses, allows multi-viewpoint configuration to be given with ease, permits switchover to the high-resolution 2-D image display or the intermixing display of a 2-D image and a 3-D image, and allows a small-depth unit to be configured, and a 3-D image display unit using that method.

This purpose of the present invention can be achieved by:

[1] A 3-D image displaying method for displaying, toward a prescribed observing region, a stereoscopic image giving only horizontal parallaxes and no vertical ones, wherein,

assuming that the number of parallax directions is p, and q and r are integers of 2 or greater that meet a relational expression, $p = q \times r$,

the method comprises a light source means on which a plurality of unit light emitting blocks are arranged in the form of a matrix, each having light emitting units disposed in respective q partial regions belonging to mutually different rows and mutually different columns of a matrix of q rows and q columns; a horizontal cylindrical lens array having a generator in the horizontal direction; and a transmission type image display device,

on said transmission type image display device, a synthetic image in which parallax images which number corresponds to that of parallax directions are synthesized by arranging, in the form of a matrix, a plurality of unit display blocks in which p pixels in total are disposed in the form of a matrix of q rows and r columns in the prescribed order, each pixel being taken one by one from approximately the same portions of p parallax image screens giving different parallaxes, and which are of q types different in arrangement pattern of p pixels; and in each row of which the p pixels giving different parallaxes are disposed such that they are repetitively arranged in the order of arrangement of the parallax images to be displayed in said observing region is displayed,

a light flux radially projected from one point on said light emitting unit in said unit light emitting block passes through the display surface of the image display device, being expanded to a breadth of at least p pixels in the horizontal section, and the light flux which has passed through said display surface reaches said observing region, being expanded from the left end to the right end thereof, and in the vertical section, being roughly focused every (n × q) pixels (where n is an integer of 1 or greater) on the display surface of said image display device by the lens function of said horizontal cylindrical lens array, and after passing through the image display device, traveling such that it is diffused in the vertical plane, which results in formation of an observing region where a different horizontal parallax image is observed in each of vertical zones which are adjacent to one another.

[2] A 3-D image displaying method for displaying, toward a prescribed observing region, a stereoscopic image giving only horizontal parallaxes and no vertical ones, wherein,

assuming that the number of parallax directions is p, and q and r are integers that meet relational expressions, $q \geqq 2$, $r \geqq 1$, and $p = q \times r$,

the method comprises a light source means on which a plurality of unit light emitting blocks are arranged in the form of a matrix, each having light emitting units each disposed in respective q partial regions belonging to mutually different rows and mutually different columns of a matrix of q rows and q columns; a horizontal cylindrical lens array having a generator in the horizontal direction; and a transmission type image display device,

on said transmission type image display device, a synthetic image in which parallax images which number corresponds to that of parallax directions are synthesized by arranging, in the form of a matrix, a plurality of unit display blocks in which p pixels in total are disposed in the form of a matrix of q rows and r columns in the prescribed order, each pixel being taken one by one from approximately the same portions of p parallax image screens giving different parallaxes, and which are of q types different in arrangement pattern of p pixels; and in each row of which the p pixels belonging to different parallax images are disposed such that they are repetitively arranged in the order of arrangement of the parallax images to be displayed in said observing region is displayed,

a light flux radially projected from said light emitting unit in said unit light emitting block passes through the display surface of the image display device, being expanded to a breadth involving at least p pixels in the horizontal section, and the light flux which has passed through said display surface reaches said observing region, being expanded from the left side to the right side thereof, and in the vertical section, being roughly focused every (n × q) pixels (where n is an integer of 1 or greater) on the display surface of said image display device by the lens function of said horizontal cylindrical lens array, and after passing through the image display device, traveling such that it is diffused in the vertical plane, which results in formation of an observing region where a different horizontal parallax image is observed in each of vertical zones which are adjacent to one another.

[3] A 3-D image displaying method as stated in par. [1] or par. [2], wherein, if the vertical dimension and the horizontal dimension of said unit light emitting block are Vs and Hs, respectively; the vertical dimension and the horizontal dimension of said unit display block are Vd and Hd, respectively; the pitch for said horizontal cylindrical lens array is Vc; the distance between said light source means and said horizontal cylindrical lens array is L1; the distance between said horizontal cylindrical lens array and the display surface of said image display device is L2; the distance between the display surface of said image display device and a prescribed observing location is L3; and the focal length for said horizontal cylindrical lens array in the vertical section is fv, the following relational expressions are met:

$$1/fv = 1/L1 + 1/L2$$

$$Vs : Vd = L1 : L2$$

$$Vs : Vd = (L1 + L2 + L3) : L3$$

$$Vs : 2(Vc/n) = (L1 + L2 + L3) : (L2 + L3),$$

and

$$Hs : (q \times Hd) = (L1 + L2 + L3) : L3.$$

[4] A 3-D image displaying method as stated in par. [1] or par. [2], wherein, if the vertical dimension and the horizontal dimension of said unit light emitting block are Vs and Hs, respectively; the vertical dimension and the horizontal dimension of said unit display block are Vd and Hd, respectively; the pitch for said horizontal cylindrical lens array is Vc; the distance between said light source means and said horizontal cylindrical lens array is L1; the distance between said horizontal cylindrical lens array and the display surface of said image display device is L2; the distance between the display surface of said image display device and a prescribed observing location is L3; and the focal length for said horizontal cylindrical lens array in the vertical section is fv, the following relational expressions are met:

$$1/fv = 1/L1 + 1/L2$$

$$Vs : Vd = L1 : L2$$

$$n/Vc = 1/Vs + 1/Vd,$$

and

$$Hs : (q \times Hd) = (L1 + L2 + L3) : L3.$$

[5] A 3-D image displaying method as stated in par. [1], par. [2], par. [3], or par. [4], wherein said horizontal cylindrical lens array is that which is constructed such that a liquid crystal layer is disposed between a pair of electrode-equipped transparent substrates,

electrodes formed on the electrode-equipped transparent substrate of at least one of said pair of electrode-equipped transparent substrates provide a linear electrode array consisting of a plurality of linear electrodes which extend in the horizontal direction, and are arranged in the vertical direction at a prescribed interval, and

by applying a prescribed potential across the electrodes of said pair of electrode-equipped transparent substrates, said liquid crystal layer is provided with a lens function.

[6] A 3-D image displaying method as stated in par. [1], par. [2], par. [3], par. [4], or par. [5], wherein a diffusibility control means which allows selection from the two conditions, i.e., the transmission condition and the diffusion one is provided between said light source means and the vicinity of the display surface of the image display device on the observer side, and

by using said diffusibility control means for selection from said two conditions with said light source means being lighted, either the 3-D image display or the 2-D image one is selected.

[7] A 3-D image displaying method as stated in par. [1], par. [2], par. [3], par. [4], par. [5], or par. [6], wherein said horizontal cylindrical lens array is constructed such that a liquid crystal layer and a high-polymer dispersion type liquid crystal layer are laminated between a pair of electrode-equipped transparent substrates,

electrodes formed on the transparent substrate of said pair of electrode-equipped transparent substrates that is contacted with the liquid crystal lens for liquid crystal layer provide a linear electrode array consisting of a plurality of linear electrodes which extend in the horizontal direction, and are arranged in the vertical direction at a prescribed interval,

an electrode formed on the other transparent substrate which is contacted with said high-polymer dispersion type liquid crystal layer provides a transparent surface electrode,

when displaying a 3-D image, a voltage is applied across said linear electrode and said transparent surface electrode for providing a lens function for said liquid crystal layer and making said high-polymer dispersion type liquid crystal layer transparent,

when displaying a 2-D image, no voltage is applied across said linear electrode and said transparent surface electrode for providing said high-polymer dispersion type liquid crystal layer with a function to diffuse the light.

[8] A 3-D image displaying method as stated in par. [7], wherein, by applying a voltage only across a part of said linear electrodes and said transparent surface electrode, the 2-D image display and the 3-D image display are intermixed.

[9] A 3-D image displaying method as stated in par. [1], par. [2], par. [3], par. [4], or par. [5], wherein a prescribed sub light source is disposed in a portion of said unit light emitting block where said light emitting unit is not disposed, such that the diffused light can be basically uniformly emitted from said region in the form of a matrix of q rows and q columns,

when displaying a 3-D image, only said light emitting unit is lighted, and

when displaying a 2-D image, said sub light source is lighted such that the light is radially projected from the entire region of said unit light emitting block basically uniformly.

[10] A 3-D image displaying method as stated in par. [1], par. [2], par. [3], par. [4], par. [5], par. [6], par. [7], par. [8], or par. [9], wherein said light source means is composed of a mask substrate having an opening in the location corresponding to said light emitting unit, and a planar light source which irradiates said mask substrate from the back thereof.

[11] A 3-D image displaying method as stated in par. [1], par. [2], par. [3], par. [4], par. [5], par. [6], par. [7], par. [8], or par. [9], wherein said light emitting unit on said light source means is composed of self-luminous type light emitting sections.

[12] A 3-D image displaying method as stated in par. [9], wherein said light source means is composed of a transmission type light source display device and a planar light source which illuminates said light source display device from the back thereof,

when displaying a 3-D image, a mask pattern which has openings only in the locations corresponding to said light emitting units is displayed on said light source display device, said planar light source being caused to function as said light emitting units,

when displaying a 2-D image, said mask pattern to be displayed on said light source display device is set such that the diffused light is basically uniformly projected from the entire region of said unit light emitting block, whereby said planar light source is caused to function also as said sub light source.

[13] A 3-D image displaying method as stated in par. [9], wherein said sub light source is composed of self-luminous type light emitting sections.

[14] A 3-D image displaying method as stated in par. [9], par. [12], or par. [13], wherein, by lighting a part of said sub light sources, intermixing display of a 2-D image and a 3-D image is performed.

[15] A 3-D image displaying method as stated in par. [1], par. [2], per. [3], par. [4], par. [5], par. [6], par. [7], par. [8], par. [9], par. [10], par. [11], par. [12], par. [13], or par. [14], wherein, by constructing each pixel of said image display device with sub-pixels in the form of horizontal RGB stripes, the deviation in color balance for each pixel due to the difference in viewing angle is suppressed, and

by dividing the light emitting unit to be used for 3-D image display on said light source means into light emitting sections of the primary colors with color filters in the form of horizontal RGB stripes or light emitting sections in the form of horizontal RGB stripes, and

disposing the light emitting sections of the primary colors on said light source means and the sub-pixels of the primary colors of said image display device such that the light emitting section and the sub-pixel of the same primary color are in the optically conjugate relationship with each other,

any cross talk between parallax images resulting from a working error or an aberration is suppressed.

[16] A 3-D image displaying method as stated in par. [1], par. [2], par. [3], par. [4], par. [5], par. [6], par. [7], par. [8], par. [9], par. [10], par. [11], par. [12], par. [13], or par. [14], wherein the light source means for the primary colors of RGB are disposed such that the light emitting units for the different primary colors are not overlapped one upon another,

the light source means for the primary colors are caused to blink in turn such that they are not lighted simultaneously; in synchronization with such sequential blinking, the images corresponding to the primary colors are displayed in turn on said transmission type image display device, and the persistence effect allows the observer to observe a full color 3-D image which is as a result of synthesizing the 3-D images of the RGB primary colors.

[17] A 3-D image displaying method for displaying, toward a prescribed observing region, a stereoscopic image giving only horizontal parallaxes and no vertical ones, by means of a linear light source array in which linear light sources extending in the vertical direction are arranged in the horizontal direction with a prescribed spacing; and a transmission type image display device which is located closer to the observer than said linear light source array, and displays a synthetic image in the form of vertical stripes that is as a result of the parallax images which number corresponds to that of parallax directions being decomposed into vertical stripes, and the vertical stripes being alternately arranged in the prescribed order to be synthesized into one image, wherein

by configuring each of said linear light sources by cyclically arranging the light emitting sections of the three primary colors of RGB in the vertical direction,

constructing each pixel of said image display device with sub-pixels in the form of horizontal RGB stripes,

disposing a horizontal cylindrical lens array having a generator in the horizontal direction between said linear light source array and said image display device, and

disposing the light emitting sections of the primary colors of said linear light source array and the sub-pixels of the primary colors of said image display device such that the light emitting section and the sub-pixel of the same primary color are in the optically conjugate relationship with each other, the utilization efficiency for the light emitted from said linear light source array is increased.

[18] A 3-D image displaying method as stated in par. [1], par. [2], par. [3], par. [4], par. [5], par. [6], par. [7], or par. [8], wherein an image formation optical system in which, instead of using said horizontal cylindrical lens array, optical units which vertical and horizontal sections provide different lens functions are arranged in the form of a matrix is provided; by the lens functions of said image formation optical system, the image of said respective unit light emitting blocks is formed on the display surface of said image display device in the vertical section; and in the horizontal section, the image of said respective unit light emitting blocks is formed in the vicinity of the display surface of said image display device on the light source side or on the observer side.

[19] A 3-D image displaying method as stated in par. [18], wherein said image formation optical system comprises a combination of a vertical cylindrical lens array composed of cylindrical lenses having a generator in the vertical direction, with a horizontal cylindrical lens array composed of cylindrical lenses having a generator in the horizontal direction,

or comprises a combination of a fly's eye lens plate with said vertical cylindrical lens array or said horizontal cylindrical lens array,

or comprises a toric lens array.

[20] A 3-D image display unit, wherein the method as stated in par. [1], par. [2], par. [3], par. [4], par. [5], par. [6], par. [7], par. [8], par. [9], par. [10], par. [11], par. [12], par. [13], par. [14], par. [15], par. [16], par. [17], par. [18], or par. [19] is used.

Said present invention functions as follows.
Assuming that the number of parallax directions is p, and q and r are integers of 2 or greater that meet a relational expression, $p = q \times r$, the light source means provides a configuration in which a plurality of unit light emitting blocks are arranged in the form of a matrix, each having light emitting units each disposed in respective q partial regions belonging to mutually different rows and mutually different columns of a matrix of q rows and q columns. For example, each unit light emitting block is configured such that a light emitting unit is disposed in the first row, first column, the second row, third column, and the third row, second column of a matrix of 3 rows and 3 columns, respectively, and the unit light emitting blocks are further arranged in the form of a matrix.
In a position closer to the observer than this light source means, a horizontal cylindrical lens array having a generator in the horizontal direction is disposed, and in a position still closer to the observer, a transmission type image display device is disposed.
On the transmission type image display device, a synthetic image as a result of synthesizing parallax images which number corresponds to that of parallax directions is displayed. The synthetic image is configured by arranging, in a matrix, unit display blocks in which p pixels in total are disposed in the form of a matrix of q rows and r columns in the prescribed order, each pixel being taken one by one from approximately the same portions of p parallax image screens giving different parallaxes.
There are q types of unit display block that are different in arrangement pattern of p pixels, and the synthetic image is formed by arranging these q types of unit display block such that the p pixels giving different parallaxes, i.e., the p pixels belonging to different parallax images are repetitively disposed in the respective rows of the synthetic image in the definite order according to the parallax directions (the order of arrangement of the parallax images to be displayed in the observing region). For example, let's assume that the number of parallax directions is 9, and first to ninth parallax image screens for use in moving the point of sight from left to right are to be synthesized. In this case, first to ninth parallax regions in the form of vertical stripes are formed from left to right in the observing region. In the respective rows of the synthetic image, the pixel taken out from the first parallax image screen, the pixel taken out from the second parallax image screen, the pixel taken out from the third parallax image screen, ..... , and the pixel taken out from the ninth parallax image screen are arranged such that they are repetitively disposed in this order.
On the other hand, in the respective unit display blocks, 9 pixels are disposed in the form of a matrix, each pixel being taken one by one from approximately the same portions of the first to ninth parallax image screens. Assuming that the unit display block is of 3 rows and 3 columns, a first type of unit display block in which the pixels of the first, second, and third parallax image screens are disposed in this order in the first row; the pixels of the fourth, fifth and sixth parallax image screens are disposed in this order in the second row; and the pixels of the seventh, eighth, and ninth parallax image screens are disposed in this order in the third row; a second type of unit display block in which the pixels of the fourth, fifth and sixth parallax image screens are disposed in this order in the first row; the pixels of the seventh, eighth, and ninth parallax image screens are disposed in this order in the second row; and the pixels of the first, second, and third parallax image screens are disposed in this order in the third row; and a third type of unit display block in which the pixels of the seventh, eighth, and ninth parallax image screens are disposed in this order in the first row; the pixels of the first, second, and third parallax image screens are disposed in this order in the second row; and the pixels of the fourth, fifth and sixth parallax image screens are disposed in this order in the third row are created.

Then, the first type, the second type and the third type of unit display block are horizontally and repetitively arranged in this order for formation of a synthetic image of three rows, which is then vertically and repetitively arranged for obtaining a synthetic image having the arrangement as stated above.

The system is constructed such that a light flux radially projected from one point on the light emitting unit in the unit light emitting block passes through the display surface of the image display device, being expanded to a breadth of at least p pixels in the horizontal section, and the flux which has passed through the display surface, being expanded to a breadth of at least p pixels, reaches the observing region, being expanded from the left end to the right end thereof. By doing this, the light flux which has passed through the p pixels consecutively arranged in a particular row of the synthetic image is expanded such that the light beams are arranged in the order of arrangement of the pixels from the left end to the right end of the observing region.

Such light flux may pass through the display surface of the image display device, being expanded to a breadth involving p pixels rather than being expanded to a breadth of p pixels of the display surface. In addition, the light flux which has passed through the display surface, being expanded to the breadth of p pixels or a breadth involving p pixels may reach the observing region, being expanded from the left side to the right side of the observing region rather than being expanded strictly from the left end to the right end thereof. In this case, however, the image will be blurred at the right and left ends of the observing region.

A light flux radially projected from one point on the light emitting unit in the unit light emitting block is roughly focused every $(n \times q)$ pixels (where n is an integer of 1 or greater) on the display surface of the image display device by the lens function of the horizontal cylindrical lens array in the vertical section, and after passing through the image display device, it is diffused in the vertical plane. Herein, the light source means is configured such that a plurality of unit light emitting blocks are arranged in the form of a matrix, each having light emitting units each disposed in respective q partial regions belonging to mutually different rows and mutually different columns of a matrix of q rows and q columns. Consequently, the light which passes through the respective rows of a particular unit display block comes from the light emitting units belonging to mutually different rows in the unit light emitting block on the light source means, therefore, the light which passes through the respective rows of a particular unit display block comes from the light emitting units belonging to mutually different columns. Therefore, the directivity of the light which passes through the same column of the unit display block varies, depending upon the row of the unit display block.

For example, the light which has passed through a unit display block in which the pixels of the first, second, and third parallax image screens are disposed in the first row in this order; the pixels of the fourth, fifth, and sixth parallax image screens are disposed in the second row in this order; and the pixels of the seventh, eighth, and ninth parallax image screens are disposed in the third row in this order; varies in horizontal directivity, depending upon the row, and the light for each particular row is radially expanded after having passed through the pixels, therefore, the light which has passed through the nine pixels included in one unit display block is assigned to the observing region from the left end to the right end thereof. In addition, the light after having passed through the respective pixels is diffused in the vertical plane, thus, an observing region where a different horizontal parallax image is observed in each of vertical zones which are adjacent to one another is formed.

Thus, p pixels which have been taken one by one from approximately the same portions of p parallax image screens are disposed in a matrix, while these pixels are assigned to the parallax regions from the left end to the right end in the observing region, therefore, unlike the system in which the pixels which number corresponds to that of parallax directions and which are from approximately the same portion are horizontally arranged, no extreme unbalance of the pixel densities in the vertical and horizontal directions is caused, which allows a high-resolution stereoscopic image to be displayed. In addition, only with the light source, the horizontal cylindrical lens array, and the image display device, a stereoscopic image can be displayed, therefore, the configuration of the system is extremely simplified, and features of easy manufacture and low cost can be provided.

If the relational expressions, $q \geqq 2$, $r \geqq 1$, and $p = q \times r$ are met, the above-mentioned stereoscopic display can also be performed. For example, if $q = 2$, and $r = 1$, a unit light emitting block in which a light emitting unit is disposed in the first row, first column, and the second row, second column in the region of a matrix of 2 row and 2 columns can be provided. In this case, the unit display block is of a matrix of 2 rows and 1 column, and assuming that the pixel taken out from the first parallax image is p1, and the pixel taken out from the second parallax image is p2, a unit display block in which pixels are vertically arranged in the order of p2 and p1, and a unit display block in which pixels are vertically arranged in the order of p1 and p2 are alternately disposed. By doing this, stereoscopic display with a number of parallax directions of 2 can be performed.

The optical system is established such that, if the vertical dimension and the horizontal dimension of the unit light emitting block are Vs and Hs, respectively; the vertical dimension and the horizontal dimension of the unit display block are Vd and Hd, respectively; the pitch for the horizontal cylindrical lens array is Vc; the distance between the light source means and the horizontal cylindrical lens array is L1; the distance between the horizontal cylindrical lens array and the display surface of the image display device is L2; the distance between the display surface of the image display device and a prescribed observing location is L3; and the focal length for the horizontal cylindrical lens array in the vertical section is fv, the following relational expressions are met:

$$1/fv = 1/L1 + 1/L2$$

$$Vs : Vd = L1 : L2$$

$$Vs : Vd = (L1 + L2 + L3) : L3$$

$$Vs : 2(Vc/n) = (L1 + L2 + L3) : (L2 + L3),$$

and

$$Hs : (q \times Hd) = (L1 + L2 + L3) : L3.$$

If the optical system meets these relational expressions, a good stereoscopic image can be observed in the assumed observing region.

Simply by establishing the optical system such that the following relational expressions are met, a good stereoscopic image can be observed:

$$1/fv = 1/L1 + 1/L2$$

$$Vs : Vd = L1 : L2$$

$$n/Vc = 1/Vs + 1/Vd$$

and

$$Hs : (q \times Hd) = (L1 + L2 + L3) : L3.$$

Herein, the distance between optical reference point and plane is that which is calculated on the assumption that the medium between such point and plane is air.

As a horizontal cylindrical lens array, a pair of electrode-equipped transparent substrates between which a liquid crystal layer is disposed is used. On the electrode-equipped transparent substrate of at least one of the pair of electrode-equipped transparent substrates, a linear electrode array consisting of a plurality of linear electrodes which extend in the horizontal direction, and are arranged in the vertical direction at a prescribed interval is formed. On the other transparent substrate, a linear electrode array may be formed such that the electrodes formed on both substrates are opposed to each other, or a surface electrode may be formed. And, by applying a prescribed potential across the electrodes of the pair of electrode-equipped transparent substrates, the liquid crystal layer is provided with a lens function.

If a non-uniform electric field is applied to the liquid crystal layer, the index of refraction of the liquid crystal layer is changed in accordance with the difference in electric field strength. Therefore, if the linear electrodes formed on one substrate are opposed to those on the other substrate, or a surface electrode is formed on the other substrate to provide a mirror image of the linear electrodes, the liquid crystal layer can be caused to function as a horizontal cylindrical lens array by applying a voltage.

Thus, a pair of electrode-equipped transparent substrates between which a liquid crystal layer is disposed is caused to function as a horizontal cylindrical lens array, therefore, a horizontal cylindrical lens array which meets a close tolerance for lens pitch can be obtained with extreme ease, and variation in preferred viewing distance, cross talk, and the like can be suppressed.

With the system which has a diffusibility control means for selecting from the two conditions, i.e., the transmission condition and the diffusion one, being located between the light source means and the vicinity of the display surface of the image display device on the observer side, and selects one of the two conditions of the diffusibility control means for switchover from the 3-D image display to the 2-D one or vice versa, while the light source means is lighted, either of the 3-D image display and the 2-D one, which uses the full resolution of the display device, can be easily and inexpensively selected.

For example, as a horizontal cylindrical lens array, a pair of electrode-equipped transparent substrates between which a liquid crystal layer and a high-polymer dispersion type liquid crystal layer are laminated is disposed is used. Electrodes formed on the transparent substrate of the pair of electrode-equipped transparent substrates that is contacted with the liquid crystal layer provide a linear electrode array consisting of a plurality of linear electrodes which extend in the horizontal direction and are arranged in the vertical direction at a prescribed interval, and an electrode formed on the other transparent substrate which is contacted with the high-polymer dispersion type liquid crystal layer provides a transparent surface electrode.

When displaying a 3-D image, a voltage is applied across the linear electrode and the transparent surface electrode for providing a lens function for the liquid crystal layer and making the high-polymer dispersion type liquid crystal layer transparent. On the other hand, when displaying a 2-D image, no voltage is applied across the linear electrode and the transparent surface electrode for providing the high-polymer dispersion type liquid crystal layer with a function to diffuse the light.

The high-polymer dispersion type liquid crystal is a liquid crystal in which liquid crystal particles are dispersed in a high polymer, thus, when a voltage is not applied, the difference in index of refraction between the liquid crystal and the high polymer causes light scattering. Therefore, by applying no voltage, the light from the light source means can be diffused, and thus a 2-D image can be displayed. On the other hand, when a voltage is applied to change the index of refraction of the liquid crystal such that the liquid crystal has the same index of refraction as that of the high polymer, the high-polymer dispersion type liquid crystal layer is made transparent. With the high-polymer dispersion type liquid crystal layer being made transparent, the crystal layer functions as a horizontal cylindrical lens array on the application of the voltage, and thus can display a 3-D image.

Thus, because the function as a horizontal cylindrical lens array and that as a diffusibility control means are both provided, the configuration is more simplified, which allows the size to be reduced. Further, simply by applying or removing the voltage, the function as a horizontal cylindrical lens array and that as a diffuser can be switched over from one to the other, thus the image display can be easily changed over from 2-D to 3-D or vice versa.

Alternately, if the voltage is applied only across a part of the linear electrodes and the transparent surface electrode, the 2-D image display and the 3-D image display can be intermixed. For example, if the voltage is applied to only the upper half of the linear electrodes, 3-D image display is performed by the upper half, while the lower half allows a 2-D image to be displayed.

A prescribed sub light source is disposed in a portion of the unit light emitting block where the light emitting unit is not disposed, such that the diffused light can be basically uniformly emitted from the region in the form of a matrix of q rows and q columns. When displaying a 3-D image, only the light emitting unit is lighted, and when displaying a 2-D image, the sub light source is lighted such that the light is radially projected from the entire region of the unit light emitting block basically uniformly. In other words, when the sub light source is lighted, the light is irradiated into the respective pixels from various directions, thus, the light projected from the respective pixels and directed toward the observing region has no particular directivity, resulting in a 2-D image being displayed.

With the system in which the light source means is composed of a mask substrate having an opening in the location corresponding to the light emitting unit, and a planar light source which irradiates the mask substrate from the back thereof, or each light emitting unit is composed of self-luminous type light emitting sections, the thickness of the light source can be reduced.

Further, with the system in which the light source means is composed of a transmission type light source display device and a planar light source which illuminates this light source display device from the back, displaying a mask pattern which has openings only in the locations corresponding to the light emitting units on the light source display device causes the planar light source to function as the light emitting units, and thus serve as a light source for displaying a 3-D image. On the other hand, if the mask pattern to be displayed on the light source display device is set such that the diffused light is basically uniformly projected from the entire region of the unit light emitting block, the planar light source can also function as the sub light sources, and thus serve as a light source for displaying a 2-D image. The sub light source may be composed of self-luminous type light emitting sections as with the light emitting unit.

Alternately, by lighting only a part of the sub light sources, the 2-D image display and the 3-D image display can be intermixed. For example, if the light for 2-D image display is applied to the upper half of the image display device, while the lower half is subjected to the light flux for 3-D image display from only the light emitting units, the upper half can display a 2-D image, while the lower half can display a 3-D image.

With the system in which each pixel of the image display device is constructed with sub-pixels in the form of horizontal RGB stripes, the deviation in color balance for each pixel due to the difference in viewing angle is suppressed. Further, with the system in which, for each light emitting unit on the light source means, color filters in the form of horizontal RGB stripes are provided or each light emitting unit is composed of light emitting sections in the form of horizontal RGB stripes such that the same primary colors are disposed in the positions which are optically conjugate with the RGB horizontal stripes in the image display device, any cross talk between parallax images resulting from a working error or an aberration can be suppressed.

More particularly, if the light from a certain light emitting unit reaches a row above or below adjacent to that to be reached in the image display device, a cross talk or the like can be caused, however, the light passed through the color filters of red (R), green (G), and blue (B) is applied, thus, for each particular color, the light irradiated into an adjacent sub pixel cannot be transmitted due to the difference in color. In other words, so long as the light is not deviated so greatly as to reach the same color sub-pixel in the adjacent row, no cross talk will be produced, and a sharp stereoscopic image can be displayed.

With the system in which the light emitting sections of the primary colors of RGB and the sub-pixels in the form of horizontal stripes of RGB constituting the respective pixels in the image display device are disposed in the optically conjugate relationship through the horizontal cylindrical array, almost all of the light projected from the light emitting section of a particular primary color is passed through the sub-pixel of the same primary color, thus, when compared to the system which uses a white light source, the light utilization efficiency can be substantially increased.

Further, with the system in which, on the light source means for the primary colors of RGB, the light emitting units for the different primary colors are disposed such that they are not overlapped one upon another; the light source means for the primary colors are caused to blink in turn such that they are not lighted simultaneously; and in synchronization with such sequential blinking, the images corresponding to the primary colors are displayed in turn on the transmission type image display device, the persistence effect allows the observer to observe a full color 3-D image which is as a result of synthesizing the 3-D images of the RGB primary colors.

Thus, the R, G, and B colors are displayed by time sharing with a single pixel, therefore, compared to the system in which each pixel is divided into three sub-pixels of RGB, the pixel density can be tripled. Further, there is no need for dividing one light emitting unit into light emitting sections of RGB, thus, the light emitting energy per time $\times$ area can be decreased by the amount corresponding to the increase in the area of the light emitting unit that can be provided for each color, which results in the service life of the light emitting device being prolonged.

Alternately, instead of using a horizontal cylindrical lens array, optical units which vertical and horizontal sections provide different lens functions are arranged in the form of a matrix to configure an image formation optical system, and by the lens functions of this image formation optical system, the image of the respective unit light emitting blocks is formed on the display surface of the image display device in the vertical section, while, In the horizontal section, the image of the respective unit light emitting blocks is formed in the vicinity of the display surface of the image display device on the light source side or on the observer side.

By doing this, the light source means can be composed of light emitting units which number is substantially small, as compared to the number of pixels for the image display device, which allows using an LED with excellent characteristics of brightness, color development, and durability as the light emitting unit.

BRIEF DESCRIPTION OF THE DRAWINGS

FIG. 1 is a perspective view showing a 3-D image display unit according to a first embodiment of the present invention;

FIG. 2 is a front view showing a light source means which the 3-D image display unit according to the first embodiment of the present invention comprises;

FIG. 3 is an explanatory drawing showing a horizontal lens array which the 3-D image display unit according to the first embodiment of the present invention comprises;

FIG. 4 is an explanatory drawing showing an example of arrangement of synthetic images that is used by the 3-D image display unit according to the first embodiment of the present invention when the number of parallax directions is 9;

FIG. 5 is an explanatory drawing showing an example of arrangement of synthetic images that is used by the 3-D image display unit according to the first embodiment of the present invention when the number of parallax directions is 8;

FIG. 6 is an explanatory drawing showing the path of light in a particular horizontal section for the 3-D image display unit according to the first embodiment of the present invention;

FIG. 7 is an explanatory drawing showing the path of light in a particular vertical section for the 3-D image display unit according to the first embodiment of the present invention;

FIG. 8 is an explanatory drawing showing the path of light projected from unit light emitting blocks which the 3-D image display unit according to the first embodiment of the present invention comprises;

FIG. 9 is an explanatory drawing showing the condition when the observing region formed ahead of the 3-D image display unit according to the first embodiment of the present invention is viewed from above;

FIG. 10 is an explanatory drawing showing the condition when the observing region formed ahead of the 3-D image display unit according to the first embodiment of the present invention is viewed from side;

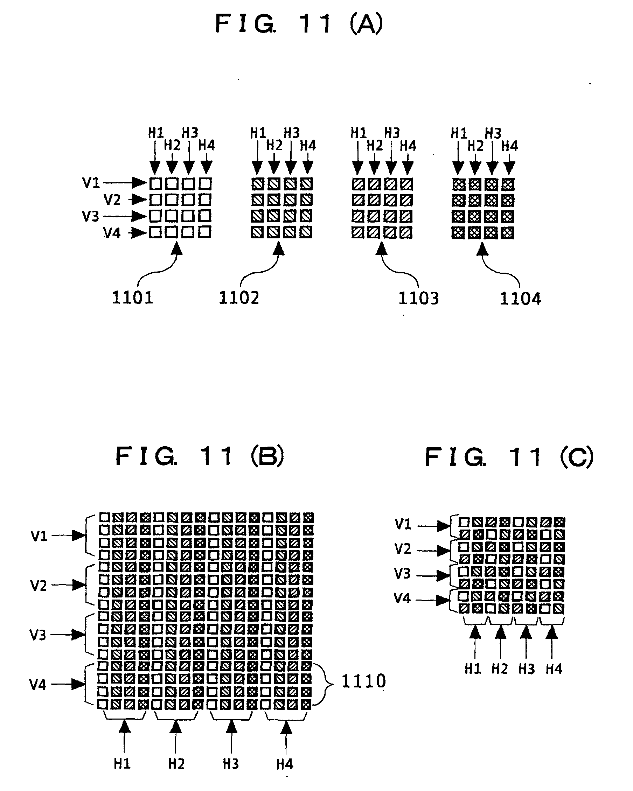

FIG. 11 (A), FIG. 11 (B), and FIG. 11 (C) are explanatory drawings for comparison of synthesizing four original pictures produced by viewing an object from four different points of sight taken by moving in the horizontal direction, into a synthetic image of 4 in number of parallax directions by the pixel arrangement in the form of vertical stripes, which is suited for the conventional lenticular system, with synthesizing them into a synthetic image of 4 in number of parallax directions by the pixel arrangement in the form of a matrix, which is suited for the system according to the present invention;

FIG. 12 (A), FIG. 12 (B), and FIG. 12 (C) are explanatory drawings for comparison of displaying four original pictures of 4 (vertical) $\times$ 4 (horizontal)

pixels in the region of 8 (vertical) $\times$ 8 (horizontal) pixels by the pixel arrangement in the form of vertical stripes, which is suited for the lenticular system, with displaying by the pixel arrangement in the form of a matrix, which is suited for the system according to the present invention;

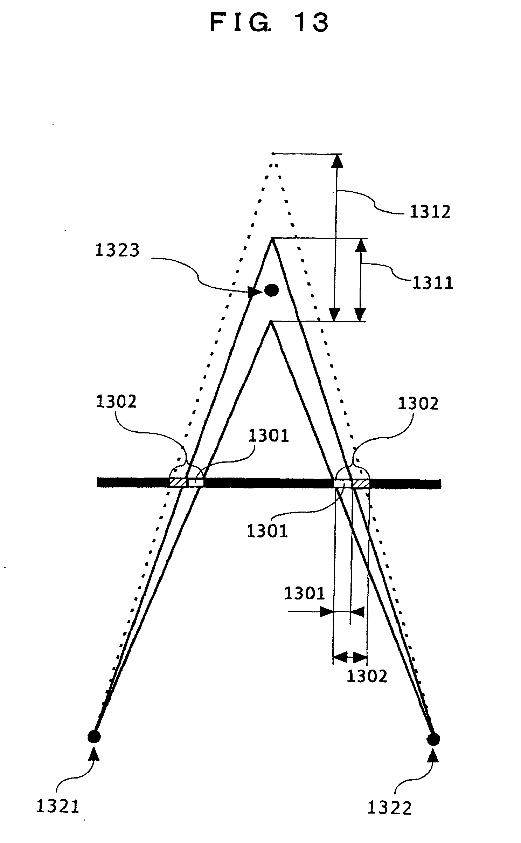

FIG. 13 is an explanatory drawing showing the relationship between the coarseness of the pixels and the depth information density.

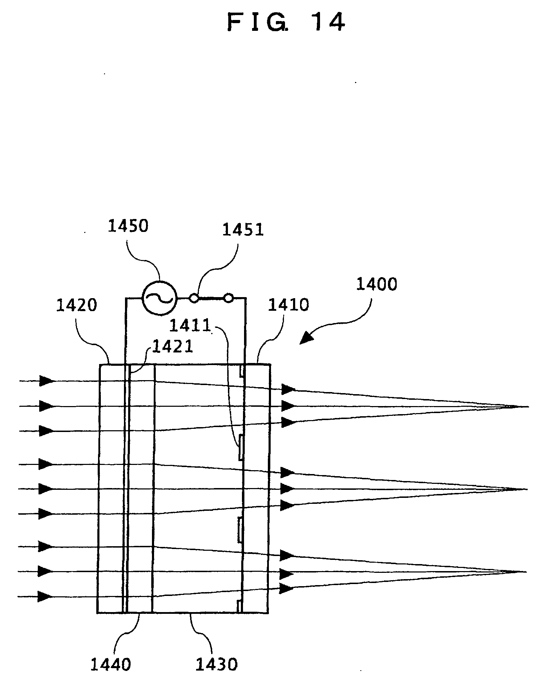

FIG. 14 is an explanatory drawing showing the voltage applied state of a liquid crystal cylindrical lens array which is used in a 3-D image display unit according to a second embodiment of the present invention;

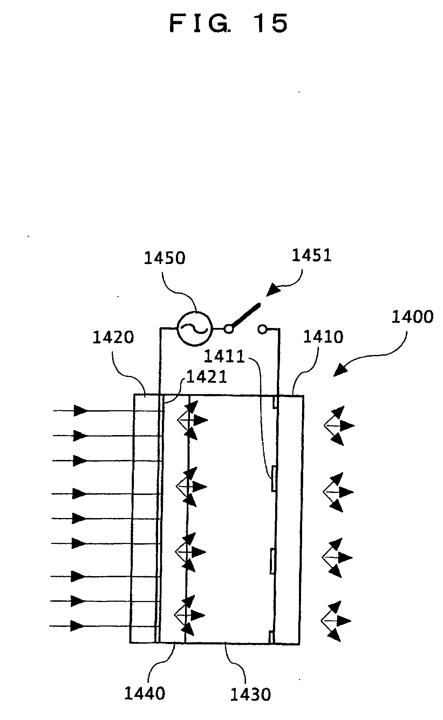

FIG. 15 is an explanatory drawing showing the voltage removed state of a liquid crystal cylindrical lens array which is used in a 3-D image display unit according to a second embodiment of the present invention;

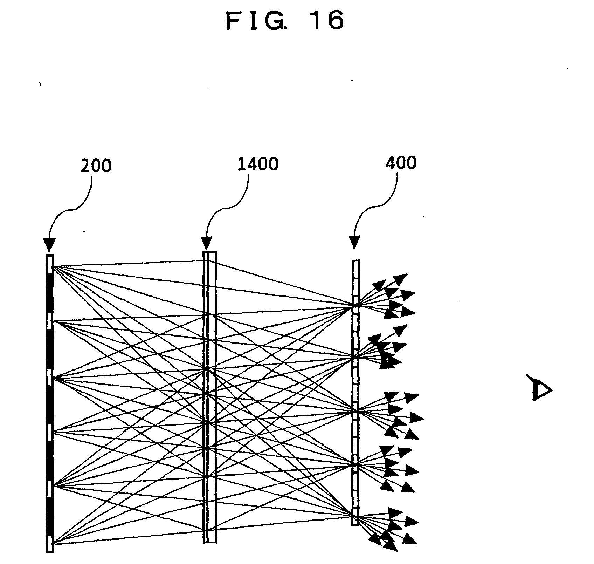

FIG. 16 is an explanatory drawing showing the path of light when 3-D image display is performed with the 3-D image display unit according to the second embodiment of the present invention;

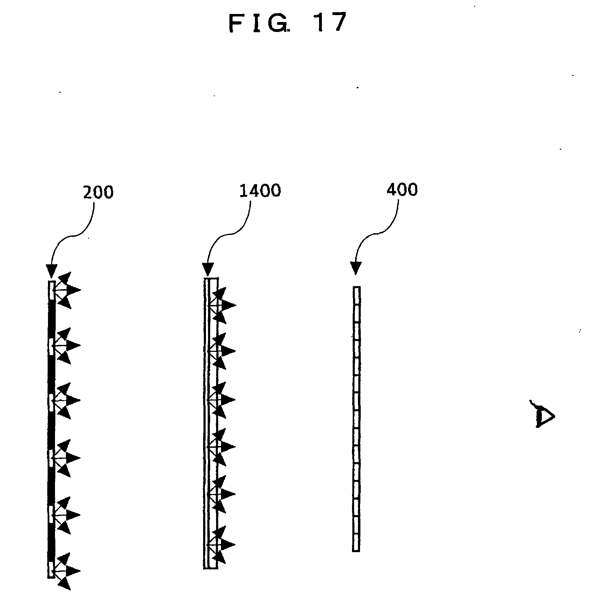

FIG. 17 is an explanatory drawing showing the path of light when 2-D image display is performed with the 3-D image display unit according to the second embodiment of the present invention;

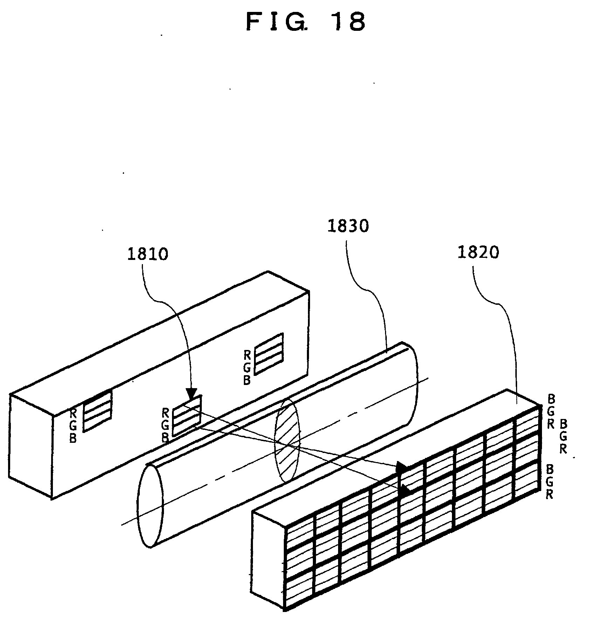

FIG. 18 is an explanatory drawing showing the main portions of a 3-D image display unit according to a fourth embodiment of the present invention;

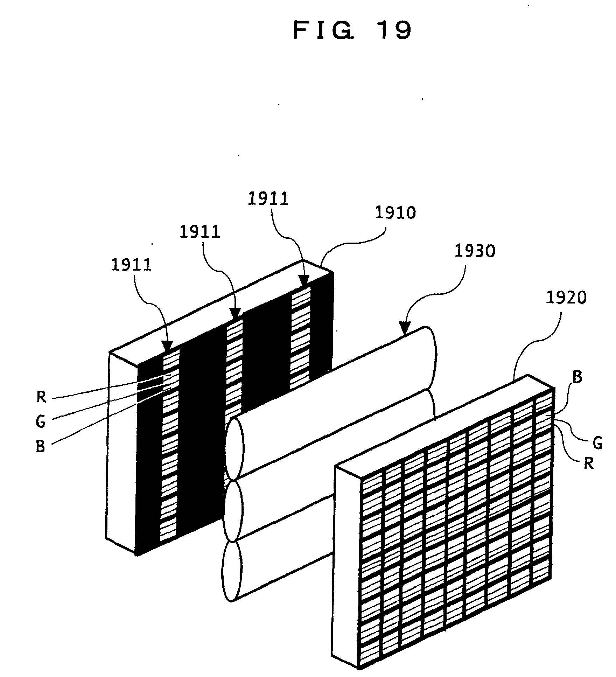

FIG. 19 is an explanatory drawing showing the main portions of a 3-D image display unit according to a fifth embodiment of the present invention;

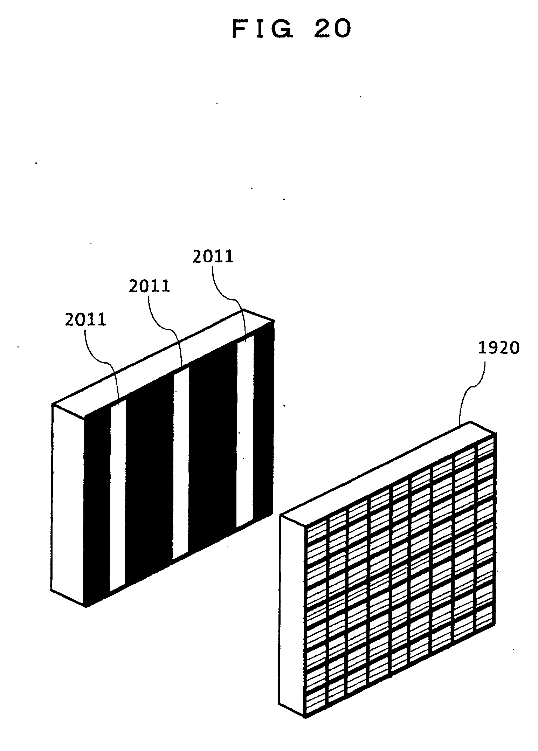

FIG. 20 is an explanatory drawing showing an example of 3-D image display unit employing a vertical stripe type light source which has been conventionally used;

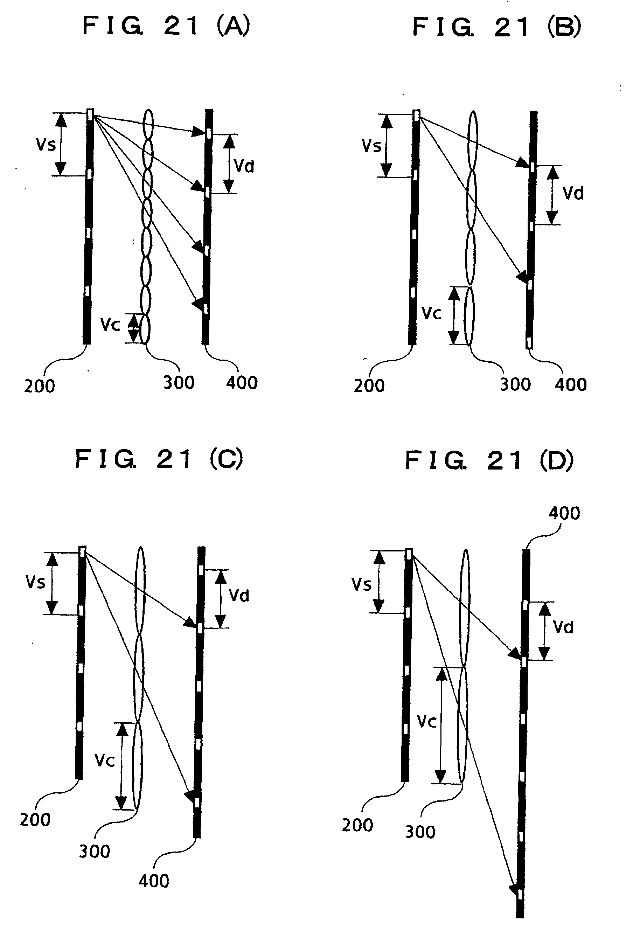

FIG. 21 (A), FIG. 21 (B), FIG. 21 (C), and FIG. 21 (D) are explanatory drawings showing various horizontal cylindrical lens arrays which are different in pitch, and with which the light emitting unit and the pixel are in the prescribed conjugate relationship;

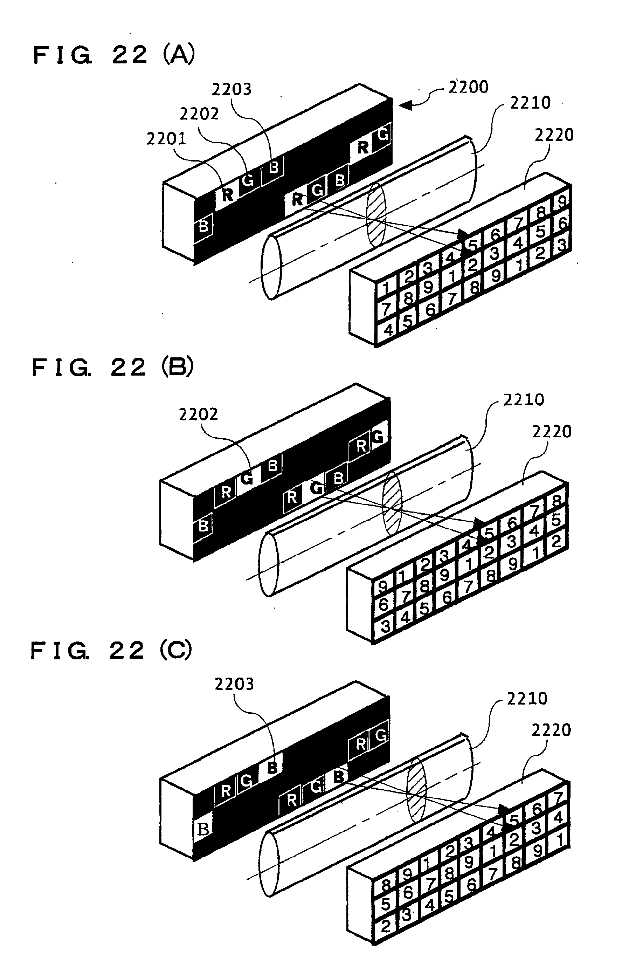

FIG. 22 (A), FIG. 22 (B), and FIG. 22 (C) are explanatory drawings showing the main portions of a 3-D image display unit according to a sixth embodiment of the present invention;

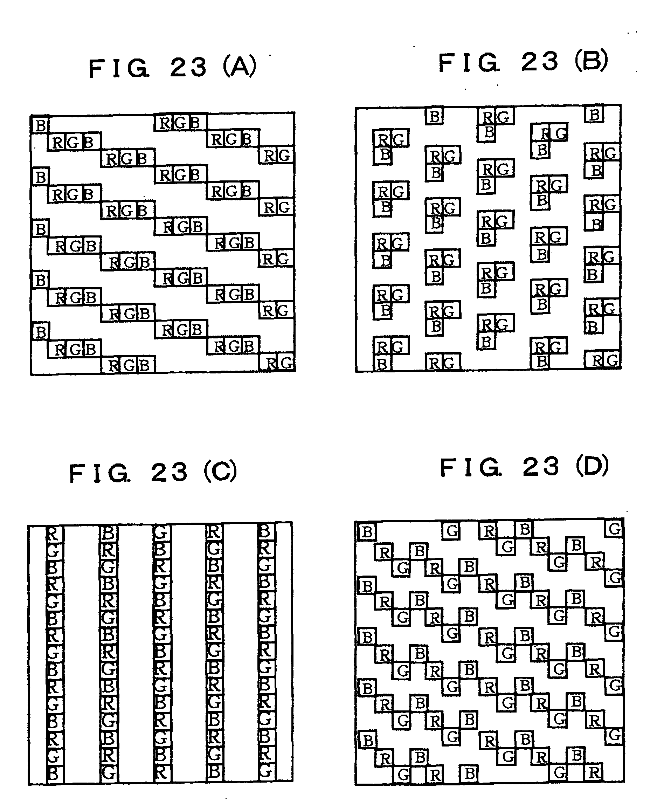

FIG. 23 (A), FIG. 23 (B), FIG. 23 (C), and FIG. 23 (D) are explanatory drawings showing various examples of light source means which is used in the 3-D image display unit according to the sixth embodiment of the present invention, the examples being different from one another in disposition of the primary colors;

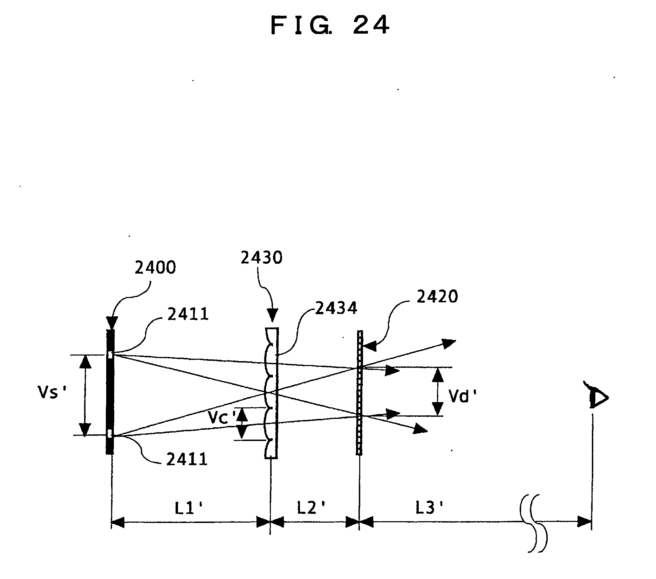

FIG. 24 is an explanatory drawing showing the path of light in the vertical section of a 3-D image display unit according to a seventh embodiment of the present invention;

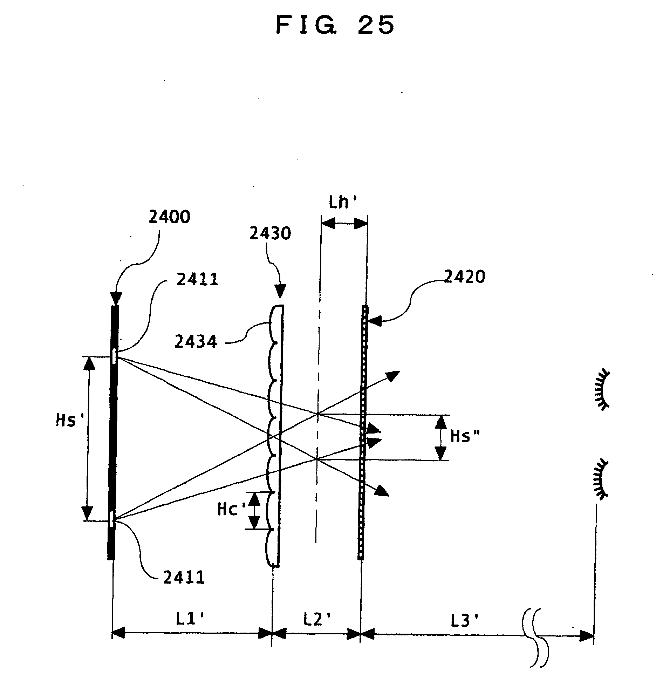

FIG. 25 is an explanatory drawing showing the path of light in the horizontal section of the 3-D image display unit according to the seventh embodiment of the present invention, when the image of the respective unit light emitting blocks is formed in the vicinity of the display surface of the image display device on the light source side;

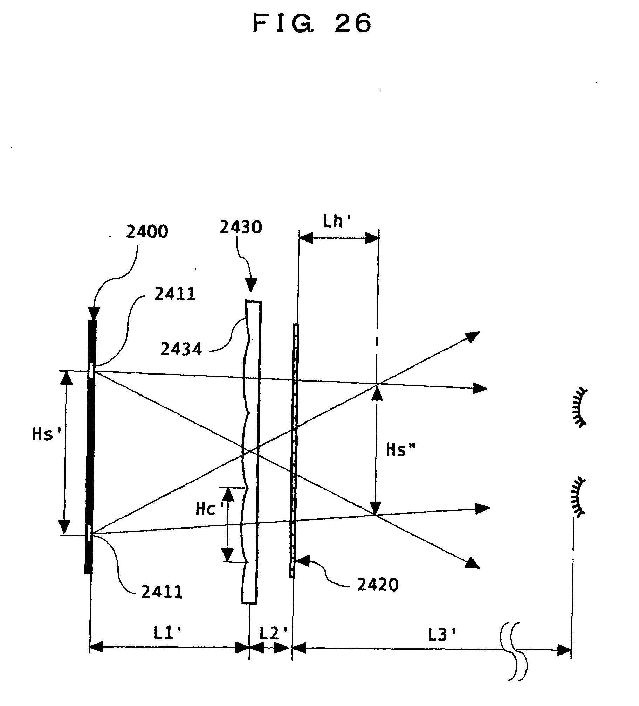

FIG. 26 is an explanatory drawing showing the path of light in the horizontal section of the 3-D image display unit according to the seventh embodiment of the present invention, when the image of the respective unit light emitting blocks is formed in the vicinity of the display surface of the image display device on the observer side;

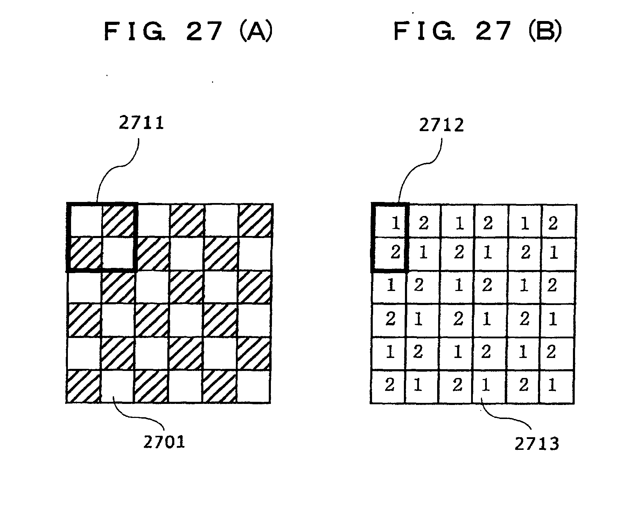

FIG. 27 (A) and FIG. 27 (B) are explanatory drawings showing the arrangement state of the images and that of the light source means corresponding to it when the unit display block is of 2 rows and 1 column;

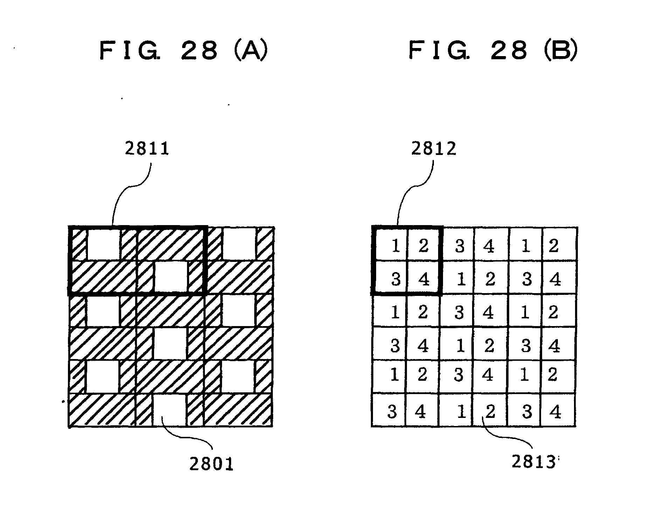

FIG. 28 (A) and FIG. 28 (B) are explanatory drawings showing the arrangement state of the images and that of the light source means corresponding to it when the unit display block is of 2 rows and 2 columns;

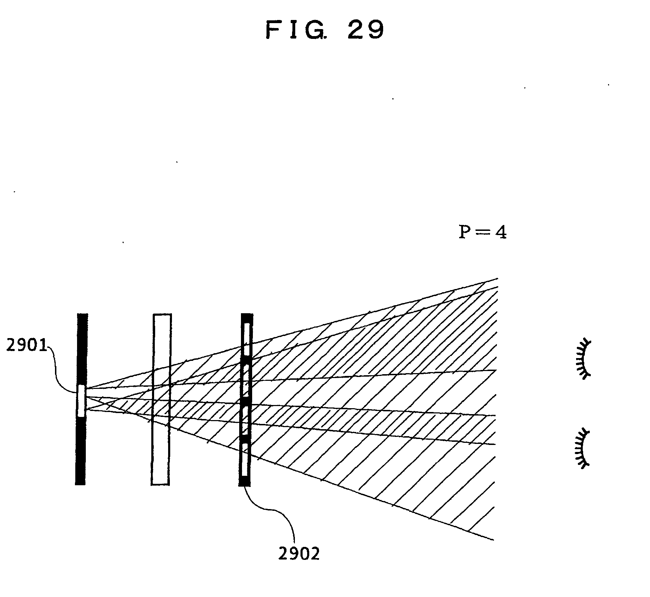

FIG. 29 is an explanatory drawing showing an example of case in which a light flux radially projected from the light emitting unit in the unit light emitting block passes through the display surface of the image display device, being expanded to a breadth covering p pixels in the horizontal section;

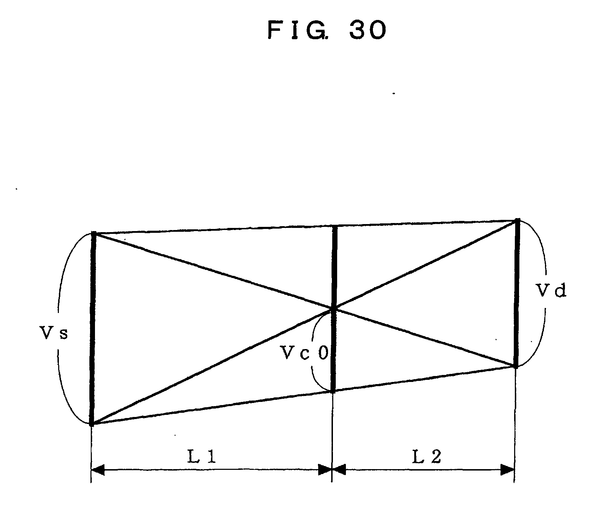

FIG. 30 is an explanatory drawing showing the relationship among Vs, Vd, and Vc0 with one another; and

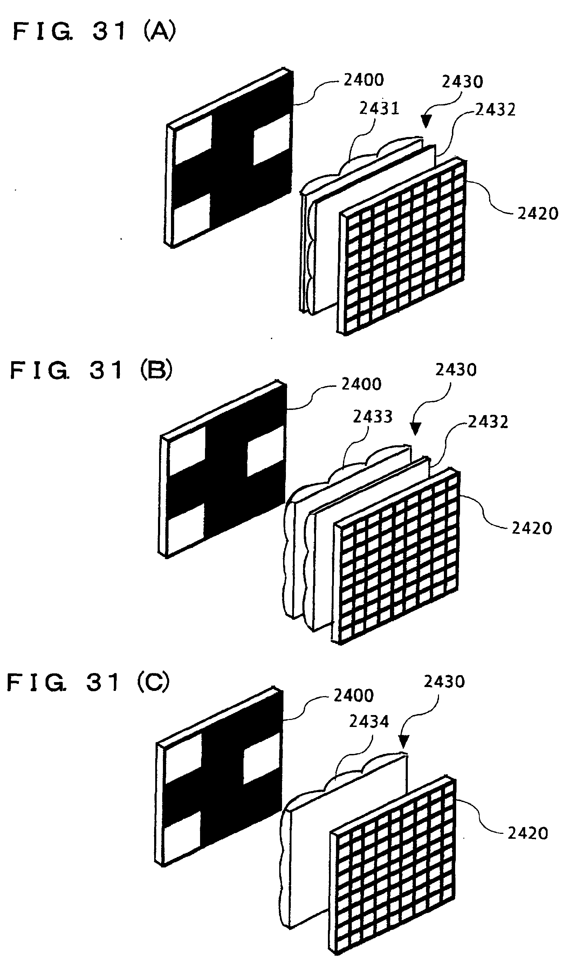

FIG. 31 (A), FIG. 31 (B), and FIG. 31 (C) are explanatory drawings showing various examples of image formation optical system which is used in the 3-D image display unit according to the seventh embodiment of the present invention.

BEST MODES FOR CARRYING OUT THE INVENTION

Hereinbelow, various embodiments of the present invention will be described with reference to the drawings.

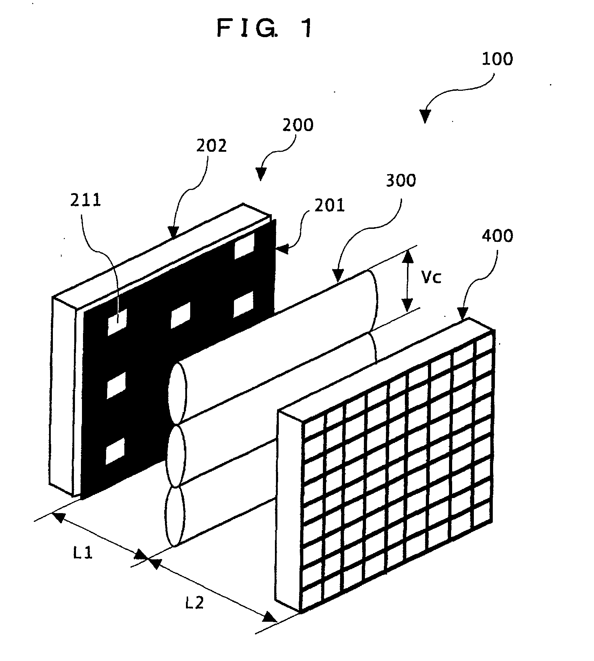

FIG. 1 shows a schematic configuration of a 3-D image display unit 100 according to a first embodiment of the present invention. As shown in FIG. 1, the 3-D image display unit 100 comprises a light source means 200, a horizontal cylindrical lens array 300, and an image display device 400.

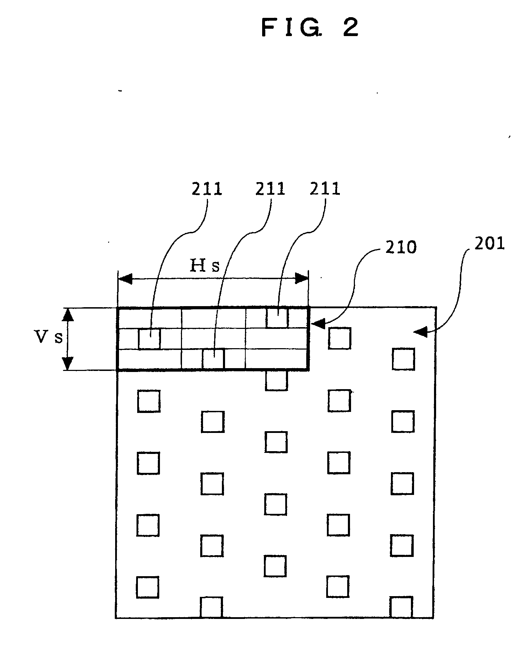

As shown in FIG. 2, the light source means 200 comprises a plurality of unit light emitting blocks 210 arranged in the form of a matrix, each having light emitting units 211 each disposed in respective 3 partial regions belonging to mutually different rows and mutually different columns of a matrix of 3 rows and 3 columns (a region with a vertical dimension of Vs and a horizontal dimension of Hs).

Assuming that the number of parallax directions for an image formed in the observing region is p, and q and r are integers of 2 or greater that meet a relational expression, $p = q \times r$, the unit light emitting block 210 provides a matrix of q rows and q columns, and the light emitting unit 211 is disposed in each of the q partial regions. As shown in FIG. 1, the light source means 200 is composed of a mask substrate 201 having an opening in the location corresponding to the light emitting unit 211, and a planar light source 202 which irradiates the mask substrate 201 from the back thereof.

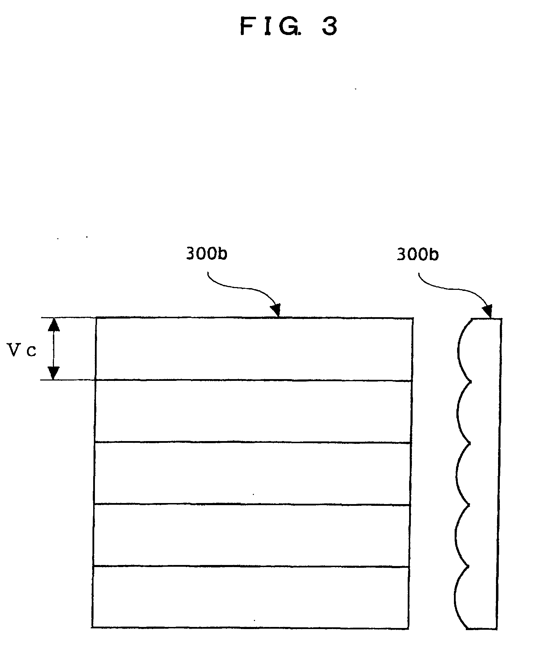

The horizontal cylindrical lens array 300 has a generator in the horizontal direction, the pitch for the horizontal cylindrical lenses being Vc. In FIG. 3, an example of one- side convex horizontal cylindrical lens array 300b is shown. The horizontal cylindrical lens array may be either both-side convex as shown in FIG. 1 or one-side convex as shown in FIG. 3.

The image display device 400 is a display device in which pixels are disposed horizontally and vertically in the form of a matrix. On the image display device 400 is displayed a synthetic image as a result of synthesizing parallax images which number corresponds to that of parallax directions. In the synthetic image, parallax images which number corresponds to that of parallax directions are synthesized by arranging a plurality of unit display blocks 410 in which p pixels in total are disposed in the form of a matrix of q rows and r columns in the prescribed order, each pixel being taken one by one from approximately the same portions of p parallax image screens giving different parallaxes. There are q types of unit display block 410 that are different in arrangement pattern of p pixels corresponding to the number of parallax directions, and by appropriately combining these, the p pixels giving different parallaxes are disposed in the respective rows of the synthesizing screen such that they are repetitively arranged in the definite order according to the parallax directions (in the order of arrangement of the parallax images to be displayed in the observing region).

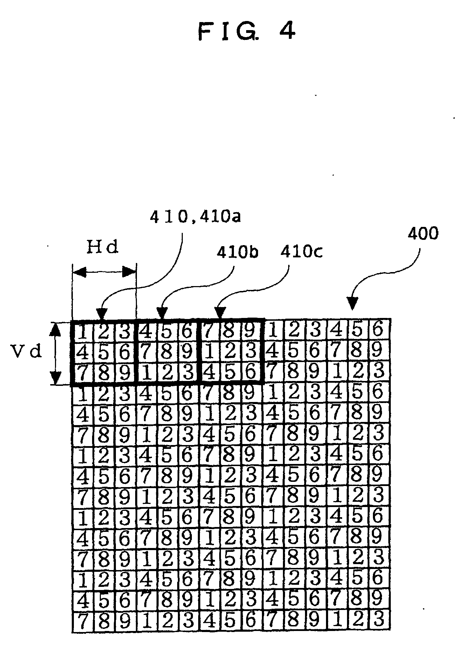

FIG. 4 shows an example of arrangement of synthetic images when the number of parallax directions, p, is 9, and $q = r = 3$. In FIG. 4, synthesis is performed over a range from a first parallax image screen which can be viewed when the point of sight is taken at the left end of the observing region, to a ninth parallax image screen which can be viewed when the point of sight is taken at the right end of the observing region, and the numbers of 1 to 9 in the figure each indicate which screen of the first to ninth parallax image screens the pertinent pixel is taken out from.

In each unit display block 410, nine pixels in total, which are each taken out one by one from approximately the same portions of the first to ninth parallax image screens, are disposed in the form of a matrix of 3 rows and 3 columns. There are q types of unit display block 410 that are different from each other in pattern of arrangement of p pixels corresponding to the number of parallax directions. In the example as shown in FIG. 4, q = 3, therefore, there are three different types of arrangement pattern; a first type of unit display block 410a, a second type of unit display block 410b, and a third type of unit display block 410c.

With the first type of unit display block 410a, the pixels of the first, second, and third parallax image screens are disposed in this order in the first row; the pixels of the fourth, fifth and sixth parallax image screens are disposed in this order in the second row; and the pixels of the seventh, eighth, and ninth parallax image screens are disposed in this order in the third row. With the second type of unit display block 410b, the pixels of the fourth, fifth and sixth parallax image screens are disposed in this order in the first row; the pixels of the seventh, eighth, and ninth parallax image screens are disposed in this order in the second row; and the pixels of the first, second, and third parallax image screens are disposed in this order in the third row. With the third type of unit display block 410c, the pixels of the seventh, eighth, and ninth parallax image screens are disposed in this order in the first row; the pixels of the first, second, and third parallax image screens are disposed in this order in the second row; and the pixels of the fourth, fifth and sixth parallax image screens are disposed in this order in the third row.

A horizontal arrangement of the first type of unit display block 410a, the second type of unit display block 410b, and the third type of unit display block 410c is considered to be one set, and by repetitively disposing this set horizontally and vertically, pixels are disposed in each row of the synthetic image such that they are arranged in the order of the pixels taken out from the first parallax image screen, the pixels taken out from the second parallax image screen, ....., the pixels taken out from the ninth parallax image screen. In other words, in FIG. 4, the numeric characters 1 to 9 are arranged in this order from left to right facing the figure in each row of the synthetic image.

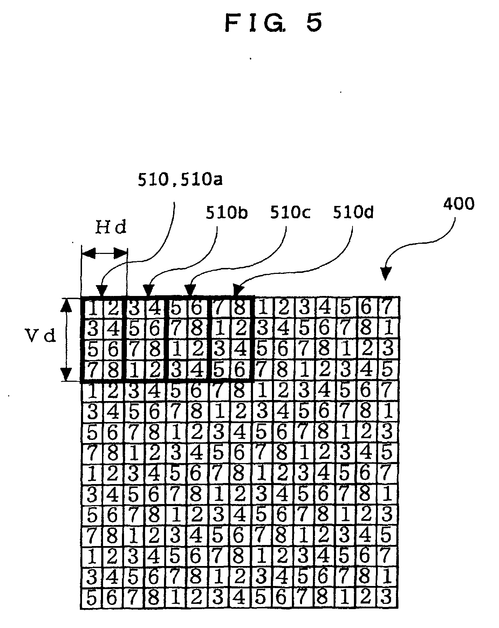

FIG. 5 shows an example of pixel arrangement when the number of parallax directions, p, is 8, $q = 4$ and $r = 2$. In FIG. 5, synthesis is performed over a range from a first parallax image screen which can be viewed when the point of sight is taken at the left end of the observing region, to an eighth parallax image screen which can be viewed when the point of sight is taken at the right end of the observing region, and the numbers of 1 to 8 in the figure each indicate the number of the parallax image screen which contains the pertinent pixel.

In each unit display block 510, eight pixels in total, which are each taken out one by one from approximately the same portions of the first to eighth parallax image screens, are disposed in the form of a matrix of 4 rows and 2 columns. In the example as shown in FIG. 5, $q = 4$, therefore, there are four different types of pixel arrangement; a first type of unit display block 510a, a second type of unit display block 510b, a third type of unit display block 510c, and a fourth type of unit display block 510d.

With the first type of unit display block 510a, the pixels of the first and second parallax image screens are disposed in this order in the first row; the pixels of the third and fourth parallax image screens are disposed in this order in the second row; the pixels of the fifth and sixth parallax image screens are disposed in this order in the third row; and the pixels of the seventh and eighth parallax image screens are disposed in this order in the fourth row. With the second type of unit display block 510b, the third and fourth pixels of the parallax image screens are disposed in this order in the first row; the fifth and sixth pixels of the parallax image screens are disposed in this order in the second row; the seventh and eighth pixels of the parallax image screens are disposed in this order in the third row; and the first and second pixels of the parallax image screens are disposed in this order in the first row.

With the third type of unit display block 510c, the fifth and sixth pixels of the parallax image screens are disposed in this order in the first row; the seventh and eighth pixels of the parallax image screens are disposed in this order in the second row; the first and second pixels of the parallax image screens are disposed in this order in the third row; and the third and fourth pixels of the parallax image screens are disposed in this order in the fourth row. With the fourth type of unit display block 510d, the seventh and eighth pixels of the parallax image screens are disposed in this order in the first row; the first and second pixels of the parallax image screens are disposed in this order in the second row; the third and fourth pixels of the parallax image screens are disposed in this order in the third row; and the fifth and sixth pixels of the parallax image screens are disposed in this order in the fourth row.

A horizontal arrangement of the first type of unit display block 510a, the second type of unit display block 510b, the third type of unit display block 510c, and the fourth type of unit display block 510d is considered to be one set, and by repetitively disposing this set horizontally and vertically, pixels are disposed in each row of the synthetic image such that they are arranged in the order of the pixels taken out from the first parallax image screen, the pixels taken out from the second parallax image screen, ....., the pixels taken out from the eighth parallax image screen.

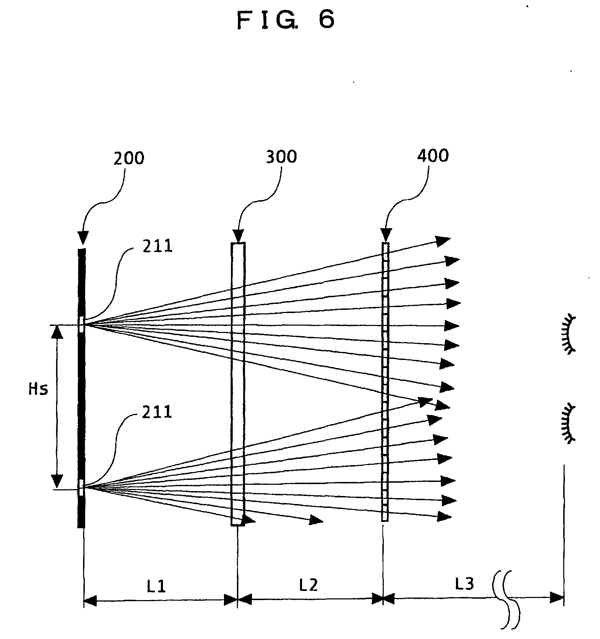

FIG. 6 shows the light paths in a particular horizontal section. A light flux radially projected from one point on the light emitting unit 211 in the unit light emitting block 210 passes through the display surface of the image display device 400, being expanded to a breadth of at least p pixels (pixels corresponding to the number of parallax directions) in the horizontal section. The light flux may be expanded to a breadth larger than this, if there are pixels which number is greater than that of parallax directions.

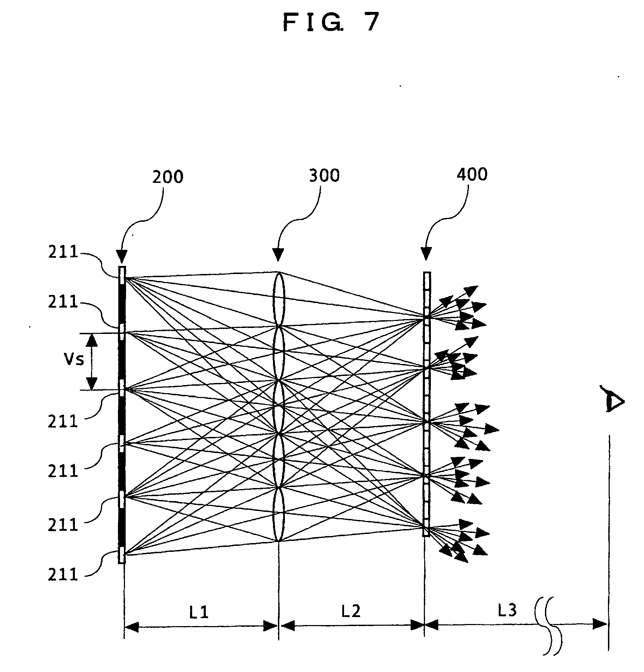

On the other hand, as shown in FIG. 7, a light flux radially projected from one point on the light emitting unit 211 in the unit light emitting block 210 is roughly focused every (n × q) pixels (where n is an integer of 1 or greater) on the display surface of the image display device 400 by the lens function of the horizontal cylindrical lens array 300 in a particular vertical section, and after passing through the image display device 400, travels such that it is diffused in the vertical plane.

Herein, the optical system is established such that, if the vertical dimension and the horizontal dimension of the unit light emitting block 210 are Vs and Hs, respectively, (see FIG. 2); the vertical dimension and the horizontal dimension of the unit display block 410, 510 are Vd and Hd, respectively, (see FIG. 4, FIG. 5); the pitch for the horizontal cylindrical lens array 300 is Vc (see FIG. 1, FIG. 3); the distance between the light source means 200 and the horizontal cylindrical lens array 300 is L1 (see FIG. 1, FIG. 7); the distance between the horizontal cylindrical lens array 300 and the display surface of the image display device 400 is L2 (see FIG. 1, FIG. 7); the distance between the display surface of the image display device 400 and a prescribed observing location is L3 (see FIG. 7); and the focal length for the horizontal cylindrical lens array 300 in the vertical section is fv, the following relational expressions are met:

$$1/fv = 1/L1 + 1/L2$$

$$Vs : Vd = L1 : L2$$

$$Vs : Vd = (L1 + L2 + L3) : L3$$

$$Vs : 2(Vc/n) = (L1 + L2 + L3) : (L2 + L3)$$

and

$$Hs : (q \times Hd) = (L1 + L2 + L3) : L3.$$

Herein, the distance between optical reference point and plane is that which is calculated on the assumption that the medium between such point and plane is air.

Next, the function will be described.

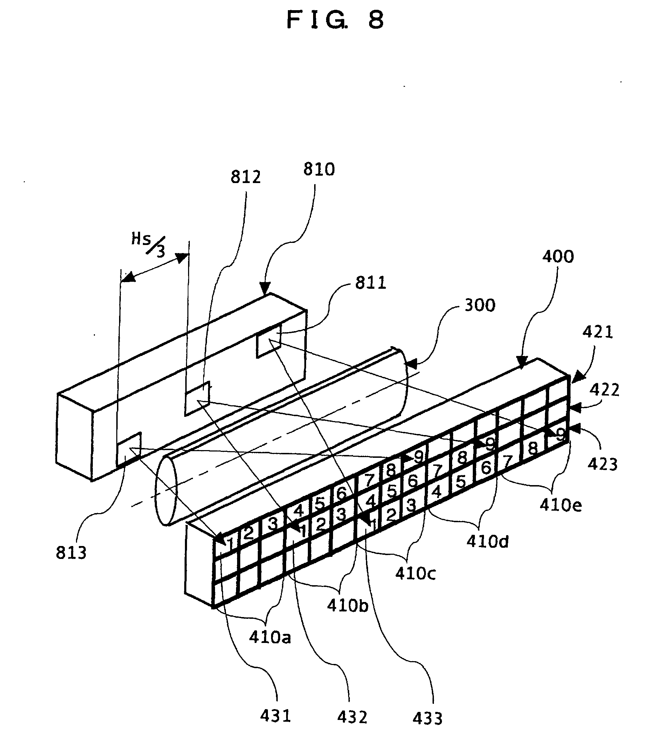

FIG. 8 shows the path of light projected from the unit light emitting block 810. When the surface of the unit light emitting block 810 is divided in the form of a matrix of 3 rows and 3 columns, a first light emitting unit 811 is disposed in the location of first row, third column; a second light emitting unit 812 is disposed in the location of second row, second column; and a third light emitting unit 813 is disposed in the location of third row, first column. The unit light emitting block 810 differs from the unit light emitting block 210 in arrangement of light emitting unit, however, the difference is only in that the entire light emitting patterns are in the mirror image relationship to each other, and in where the light emitting units are divided into sets of three in a horizontal arrangement, and here, for convenience of description, the unit light emitting block having an arrangement as shown in FIG. 8 is given, however, when the entire light source means 200 is considered, both are equivalent to each other.

A light flux radially projected from the third light emitting unit 813 located in the third row, first column in the unit light emitting block 810 is subjected to the lens action in the vertical direction by the horizontal cylindrical lens array 300 disposed ahead of the unit light emitting block 810 in the light path, being focused into the pixels belonging to the top row 421 of the three rows in the image display device 400 as shown in FIG. 8. The light flux radially projected from the third light emitting unit 813 is expanded to a breadth of at least p pixels, which correspond to the number of parallax directions, on the display surface of the image display device 400 in the horizontal direction. More particularly, the light flux passes through the display surface, being expanded to the nine pixels included in the top row 421 consisting of horizontally arranged unit light emitting blocks 410a, 410b, and 410c in the image display device 400. The light flux which has passed through these nine pixels is further expanded from the left end to the right end of the observing region which is ahead of the image display device 400. The numbers of 1 to 9 given to the respective pixels in the figure each indicate the number of the original parallax image screen to which the pertinent pixel in the synthesizing screen belongs, as is the case with FIG. 4 and the like.

A light flux radially projected from the second light emitting unit 812 located in the second row, second column is subjected to the lens action in the vertical direction by the horizontal cylindrical lens array 300, and due to the difference in angle of incidence of the flux into the horizontal cylindrical lens array 300, the flux is now focused into the pixels belonging to the middle row 422 in the image display device 400 as shown in FIG. 8. The light flux radially projected from the second light emitting unit 812 is passed through the display surface, being expanded to the breadth of the nine pixels included in the middle row 422 consisting of unit light emitting blocks 410b, 410c, and 410d in the image display device 400, which are provided by shifting the top row 421 to the right by one unit display block. The light flux which has passed through these nine pixels is further expanded from the left end to the right end of the observing region which is ahead of the image display device 400.

A light flux radially projected from the second light emitting unit 811 located in the first row, third column is subjected to the lens action in the vertical direction by the horizontal cylindrical lens array 300, and due to the difference in angle of incidence of the flux into the horizontal cylindrical lens array 300, the flux is now focused into the pixels belonging to the bottom row 423 in the image display device 400 as shown in FIG. 8. The light flux radially projected from the second light emitting unit 811 is passed through the display surface, being expanded to the breadth of the nine pixels included in the bottom row 423 consisting of unit light emitting blocks 410c, 410d, and 410e in the image display device 400, which are provided by further shifting the top row 421 to the right by one unit display block. The light flux which has passed through these nine pixels is further expanded from the left end to the right end of the observing region which is ahead of the image display device 400.

The light flux which has passed through the nine pixels belonging to the top row 421 consisting of unit light emitting blocks 410a, 410b, and 410c; the light flux which has passed through the nine pixels belonging to the middle row 422 consisting of unit light emitting blocks 410b, 410c, and 410d; and the light flux which has passed through the nine pixels belonging to the middle row 423 consisting of unit light emitting blocks 410c, 410d, and 410e each reach the same observing region, being expanded from the left end to the right end thereof, because the distance between the third light emitting unit 813 and the second light emitting unit 812 is longer than the breadth of three pixels (the breadth of the unit display block) in the image display device 400, resulting from the above mentioned relational expression: $Hs : (q \times Hd) = (L1 + L2 + L3) : L3$.

For example, the light which has passed through the pixel 431 in the first row, first column in the first type of unit display block 410a, being emitted from the third light emitting unit 813; the light which has passed through the pixel 432 in the second row, first column in the second type of unit display block 410b, being emitted from the second light emitting unit 812; and the light which has passed through the pixel 433 in the third row, first column in the third type of unit display block 410c, being emitted from the first light emitting unit 811; differ from one another in angle of incidence into the pixel from the light emitting unit in the horizontal section, therefore, the light which has passed through these three pixels 431, 432, and 433 is focused into approximately the same location in the vicinity of the left end of the observing region.

Therefore, when the location of the first type of unit display block 410a is viewed from near the left end of the observing region, the light which has passed through the pixel in the first row, first column thereof can be observed; when the location of the second type of unit display block 410b is viewed, the light which has passed through the pixel in the second row, first column thereof can be observed; and when the location of the third type of unit display block 410c is viewed, the light which has passed through the pixel in the third row, first column thereof can be observed. Because of the pixel disposition for the synthetic image, these all provide pixels constituting the first parallax image screen. The light which has passed through the pixels is diffused in the vertical plane as shown in FIG. 7.

The above statement can be extended to the entire display screen of the image display device 400: when the image display device 400 is viewed from near the left end of the observing region, the first parallax image screen can be viewed over the entire screen of the image display device 400. The zone where the first parallax image screen can be viewed is formed as a vertical zone of a prescribed breadth at the left end of the observing region. Likewise, the zone where the second parallax image screen can be viewed is formed as a vertical zone at the right thereof. Further at the right of the zone where the second parallax image screen can be viewed, the zone where the third parallax image screen can be viewed is formed as a vertical zone. Thus, from the left end to the right end of the observing region, the vertical zones which number corresponds to that of parallax directions where different horizontal parallax image screens can be viewed are formed.

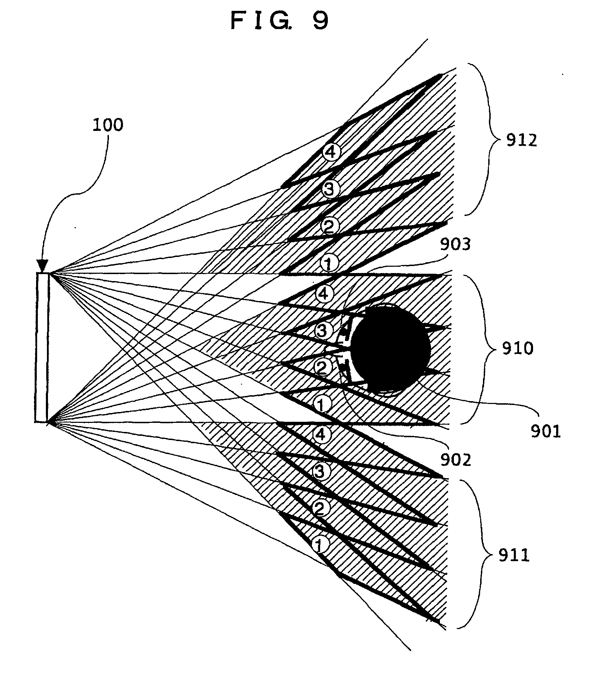

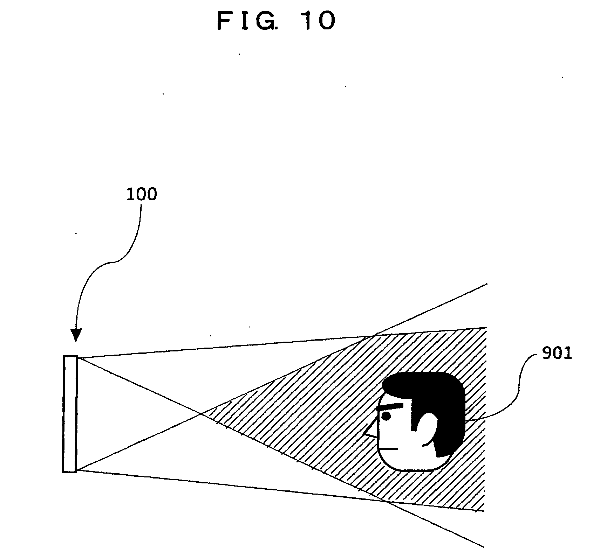

FIG. 9 and FIG. 10 illustrate the condition of the observing region when the number of parallax directions is 4. FIG. 9 illustrates the condition when the observing region formed ahead of the image display device 400 is viewed from above, while FIG. 10 the condition when the observing region is viewed from side. The regions which are inside the bold lines in the figure, being numbered from 1 to 4, are those where one parallax image corresponding to the pertinent number can be observed on the entire screen of the image display device 400 when the 3-D image display unit 100 is viewed with one eye from an optional location therein, providing optimum observing regions.

For example, from the location of the left eye 902 of the observer 901 as shown in FIG. 9, the second parallax image screen can be observed on the screen of the image display device 400, and from the location of the right eye 903, the third parallax image screen can be observed on the screen of the image display device 400.

In any other locations in the shaded areas, stereoscopic vision can be performed, however, the screen which is viewed from one eye is vertically split, and thus a plurality of parallax images may be observed, therefore, when the boundary between parallax images is conspicuous, the picture quality may be deteriorated. However, by providing a sufficiently great number of parallax directions, a good stereoscopic image can be observed even outside of the bold line. If the number of parallax directions is sufficiently great, that the screen is changed as the one eye is moved back and forth offers an advantage of that a movement parallax in the crosswise direction can be obtained although it is pseudo.

When the light flux radially projected from a particular light emitting unit is expanded to a breadth larger than the breadth of the pixels which number corresponds to that of parallax directions, on the image display device 400, a sub-lobe 911, 912 is formed in addition to the main lobe 910 (the main observing region) as shown in FIG. 9, and from that sub-lobe region, a stereoscopic image can be observed.

Next, that synthesizing a plurality of parallax image screens by the pixel arrangement in the form of a matrix as shown in FIG. 4 and FIG. 5 can improve the resolution of a 3-D image display, minimize the variation in pixel density in the vertical and horizontal directions, and enhance the depth resolving power will be described.

FIG. 11 (A), FIG. 11 (B), and FIG. 11 (C) are explanatory drawings for comparison of synthesizing four original pictures produced by viewing an object from four different points of sight taken by moving in the horizontal direction (horizontal parallax image screens 1101 to 1104 in the form of a matrix of 4 pixels (vertical) $\times$ 4 pixels (horizontal)) into a synthetic image of 4 in number of parallax directions by the pixel arrangement in the form of vertical stripes, which is suited for the conventional lenticular system, with synthesizing them into a synthetic image of 4 in number of parallax directions by the pixel arrangement in the form of a matrix, which is suited for the system according to the present invention. FIG. 11 (B) and FIG. 11 (C) show display elements which can display the entire image information as given in FIG. 11 (A) and with which the vertical pixel pitch is the same as the horizontal one.

With the lenticular system, when a 3-D image which gives no vertical parallaxes, and only horizontal parallaxes is displayed, the cylindrical lenses are disposed in the form of vertical stripes, and in the breadth of each cylindrical lens, the original pictures which number corresponds to that of parallax directions are disposed, being arranged in the horizontal direction. Therefore, a pixel contained in one original picture appears at a pixel interval corresponding to the number of parallax directions in the horizontal direction of the synthetic image for 3-D image display.

In an example as shown in FIG. 11 (A), FIG. 11 (B), and FIG. 11 (C), the number of parallax directions in the horizontal direction is 4, therefore, in the synthetic image by the pixel arrangement in the form of vertical stripes, which is suited for the lenticular system, as shown in FIG. 11 (B), a pixel which belongs to a horizontal parallax image screen of the same parallax appears at an interval of 4 pixels in the horizontal direction. For example, in the first row of the synthetic image, a (v1, H1) pixel of the original picture 1101, a (v1, H1) pixel of the original picture 1102, a (v1, H1) pixel of the original picture 1103, and a (v1, H1) pixel of the original picture 1104 are disposed, and following this, a (v1, H2) pixel of the original picture 1101, a (v1, H2) pixel of the original picture 1102, a (v1, H2) pixel of the original picture 1103, and a (v1, H2) pixel of the original picture 1104 are disposed.

Further, a (v1, H3) pixel of the original picture 1101, a (v1, H3) pixel of the original picture 1102, a (v1, H3) pixel of the original picture 1103, and a (v1, H3) pixel of the original picture 1104 are disposed, and finally, a (v1, H4) pixel of the original picture 1101, a (v1, H4) pixel of the original picture 1102, a (v1, H4) pixel of the original picture 1103, and a (v1, H4) pixel of the original picture 1104 are disposed.

Thus, a pixel contained in the original picture of a certain parallax appears at an interval of 4 pixels in the horizontal direction on the synthetic image, therefore, to display the original picture on a display device with which the vertical pixel pitch is the same as the horizontal one, while maintaining the aspect ratio of the original picture, the same pixel must be repetitively displayed four times in the vertical direction. For example, the (v4, H4) pixel of the original picture 1104 in FIG. 11 (A) is displayed, being extended to four pixels 1110 at the bottom of the rightmost column in FIG. 11 (B). As a result of this, the number of pixels required to display the synthetic image is increased to the number of pixels of the entire original picture multiplied by the number of parallax directions. In an example as shown in FIG. 11 (A), FIG. 11 (B), and FIG. 11 (C), the total number of pixels of the original pictures 1101 to 1104 is 64, while the pixel arrangement in the form of vertical stripes, which is suited for the lenticular system, requires 16 pixels (vertical) $\times$ 16 pixels (horizontal), i.e., 256 pixels. In other words, because the number of parallax directions is 4, the required number of pixels is as many as four times the 64 pixels of the original pictures, i.e., 256 pixels.

Contrarily to this, with the pixel arrangement in the form of a matrix, which is suited for the system according to the present invention, as shown in FIG. 11 (C), four pixels, which the lenticular system arranges in one row in the horizontal direction, are disposed in the form of a matrix of 2 (vertical) pixels $\times$ 2 (horizontal) pixels. Therefore, the interval for the horizontal direction at which a pixel of a certain parallax contained in the original picture appears and the interval for the vertical direction are both 2 pixels, and thus the aspect ratio can be maintained without the need for providing redundant pixels. In other words, as shown in FIG. 11 (C), all the pixels (64 pixels) of the four original pictures 1101 to 1104 can be expressed with 64 pixels constituting a matrix of 8 (vertical) pixels $\times$ 8 (horizontal) pixels.

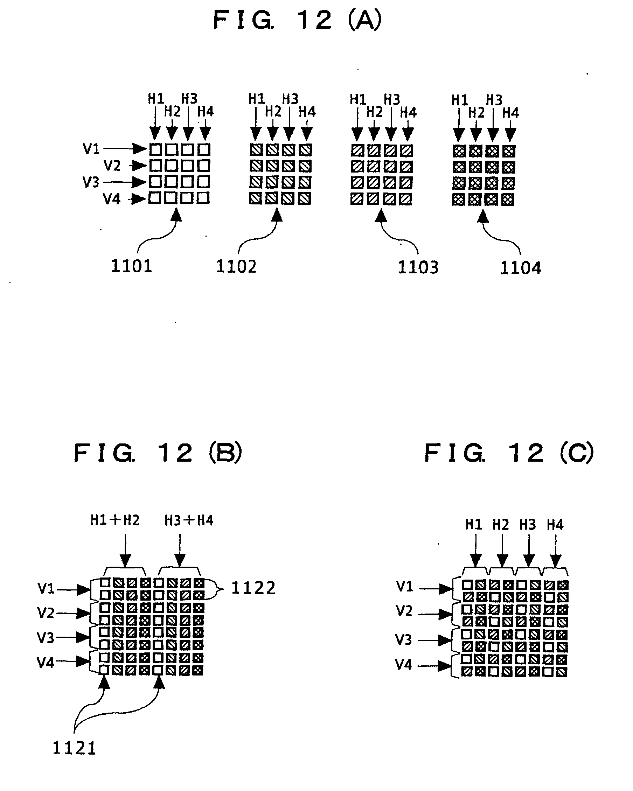

FIG. 12 (A), FIG. 12 (B), and FIG. 12 (C) are explanatory drawings for comparison of displaying the four original pictures 1101 to 1104 of 4 (vertical) pixels $\times$ 4 (horizontal) pixels in the region of 8 (vertical) pixels $\times$ 8 (horizontal) pixels by the pixel arrangement in the form of vertical stripes, which is suited for the lenticular system, with displaying by the pixel arrangement in the form of a matrix, which is suited for the system according to the present invention. FIG. 12 (B) and FIG. 12 (C) show display elements which can display the image information as given in FIG. 12 (A) and with which the vertical pixel pitch is the same as the horizontal one. In the horizontal direction (with the pixels as indicated with the arrow 1121 and the like), the four pixels of the original picture is compressed into two pixels (the amount of information being reduced), and in the vertical direction (with the pixels as indicated with the arrow 1122 and the like), the one pixel of the original picture is extended to two pixels (the amount of information being not changed). For example, compression in the horizontal direction is performed by averaging two adjacent pixels (H1 and H2 or H3 and H4), thinning out, or the like.

When the quality of the image by the pixel arrangement in the form of vertical stripes, which is suited for the lenticular system, as shown in FIG. 12 (B), is compared with that of the image by the pixel arrangement in the form of a matrix, which is suited for the system according to the present invention, as shown in FIG. 12 (C), it is found that the ratio of the horizontal information density for the pixel arrangement in the form of vertical stripes to that for the pixel arrangement in the form of a matrix is 1 : 2. For both, the horizontal information density is equal, the ratio being 1 : 1. Further, the ratio of the depth information density for the pixel arrangement in the form of vertical stripes to that for the pixel arrangement in the form of a matrix is approximately 1 : 2 (varying depending upon the horizontal information density), thus the ratio in amount of 3-D information for constituting a stereoscopic image between the pixel arrangement in the form of vertical stripes and that in the form of a matrix is approximately 1 : 4 (1 : number of parallax directions).

Thus, with a synthetic image by the pixel arrangement in the form of a matrix, which is suited for the 3-D image displaying method according to the present invention, the pixels (pixel set) which number corresponds to that of parallax directions, and which are in approximately the same position on the original pictures which number corresponds to that of parallax directions are arranged in a matrix, therefore, the efficiency for display of image information is substantially high, compared to a synthetic image in which all the pixels included in one pixel set are arranged in one row in the horizontal direction, as with the lenticular system and the parallax barrier system. More particularly, when a multiviewpoint 3-D image in which the number of parallax directions is a square number, such as 4, 9, 16, ... is displayed by using a display device with which the vertical pixel pitch is the same as the horizontal one, the present invention allows the number of pixels for the display element to be reduced to 1/4, 1/9, 1/16, ... that for the lenticular system and the parallax barrier system, making it possible to provide a substantially efficient, and high resolution stereoscopic display.

FIG. 13 shows the relationship between the coarseness of the pixels and the depth information density, using the lenticular system as an example. With the conventional lenticular system, which uses cylindrical lenses, the pixel for each particular parallax that is accommodated in one cylindrical lens seems to expand to the entire breadth of the cylindrical lens. This phenomenon is called the sampling effect. For the synthetic image as shown in FIG. 11 (B), for example, cylindrical lenses having a breadth of roughly four pixels in the horizontal direction are used, thus, one pixel seems to expand to a breadth of roughly four pixels.

In FIG. 13, if a point of sight 1321 provides the position of the left eye of the observer, and a point of sight 1322 provides the position of the right eye of the same observer, then, with a pixel 1301, which has a narrow breadth, the depth direction resolution limit (the distance between two points that can be resolved) is relatively small as indicated with an arrow 1311, the depth information density being high, however, with a pixel 1302, which is broader than the pixel 1301, the depth direction resolution limit is increased as indicated with an arrow 1312, the depth information density being lowered.

Therefore, in the case when a pixel of the same original picture appears at an interval of 2 pixels in the horizontal direction as shown in FIG. 11 (C), the breadth of each pixel is accommodated in the breadth of two pixels, even if the sampling effect is developed, therefore, as compared to the case when the sampling effect causes each pixel to expand to the breadth of four pixels in the horizontal direction as shown in FIG. 11 (B), a high depth information density can be obtained. A point 1323 as shown in FIG. 13 indicates the object of visual recognition.

Next, a second embodiment of the present invention will be described.

With the second embodiment, it is possible to switch over between the 3-D image display and the 2-D image display. With the second embodiment, a liquid crystal cylindrical lens array 1400 as shown in FIG. 14 and FIG. 15 is used instead of the horizontal cylindrical lens array 300. The liquid crystal cylindrical lens array 1400 is constructed such that a liquid crystal layer for liquid crystal lens, 1430, and a high-polymer dispersion type liquid crystal layer 1440 are laminated between a pair of electrode-equipped transparent substrates 1410 and 1420.

Electrodes formed on the electrode-equipped transparent substrate 1410 on the side where it is contacted with the liquid crystal lens for liquid crystal layer, 1430, provide a linear electrode array consisting of a plurality of linear electrodes 1411 which extend in the horizontal direction, and are arranged in the vertical direction at a prescribed interval. The pitch for the linear electrodes 1411 is equal to Vc for the horizontal cylindrical lens array 300 which is used in the first embodiment. An electrode which is formed on the electrode-equipped transparent substrate 1420 on the side where it is contacted with the high-polymer dispersion type liquid crystal layer 1440 provides a transparent surface electrode 1421.

When displaying a 3-D image, a switch 1451 is closed to apply a prescribed voltage across the linear electrode 1411 and the transparent surface electrode 1421 from a power supply 1450, as shown in FIG. 14, for providing a lens function for the liquid crystal layer for liquid crystal lens, 1430. If a non-uniform electric field is applied to the liquid crystal layer, the index of refraction of the liquid crystal layer is changed in accordance with the difference in electric field strength. The electrodes formed on the electrode-equipped transparent substrate 1410 are in the form of horizontal stripes, and the opposed electrode 1421 is a surface electrode, therefore, on the side of the surface electrode 1421, a mirror image of the linear electrodes 1411 is provided, and consequently, the same electric field as that which would be produced, if electrodes in the form of horizontal stripes were disposed, being opposed to each other, is produced. Thus, when a voltage is applied, the liquid crystal layer for liquid crystal lens, 1430, optically functions as a horizontal cylindrical lens array.

On the other hand, the high-polymer dispersion type liquid crystal is a liquid crystal in which liquid crystal particles are dispersed in a high polymer, thus, when a voltage is not applied, the difference in index of refraction between the liquid crystal and the high polymer causes light scattering, while, when an appropriate voltage is applied, the index of refraction of the liquid crystal is changed such that the liquid crystal has the same index of refraction as that of the high polymer, resulting in the high-polymer dispersion type liquid crystal layer being made transparent.

Therefore, when an appropriate voltage is applied across the linear electrode 1411 and the transparent surface electrode 1421 from the power supply 1450, the liquid crystal layer for liquid crystal lens, 1430, functions as a horizontal cylindrical lens array, the high-polymer dispersion type liquid crystal layer 1440 being made transparent. Consequently, as shown in FIG. 16, the liquid crystal cylindrical lens array 1400 functions as a horizontal cylindrical lens array 300 as shown in FIG. 1, which results in a 3-D image being displayed.

When displaying a 2-D image, the switch 1451 is opened to remove the voltage across the linear electrode 1411 and the transparent surface electrode 1421 as shown in FIG. 15. This causes the high-polymer dispersion type liquid crystal layer 1440 to diffuse the light from a light source 200. As shown in FIG. 17, this results in the light which passes through each pixel of the image display device 400 being not limited to that having a specific directivity, which provides a 2-D image display.

With the light source 200, the light emitting unit 211 is distributed as shown in FIG. 1 and FIG. 2, thus, if only removal of the lens function of the liquid crystal layer for liquid crystal lens, 1430, is performed, with the diffusion being not provided, the brightness of the screen in displaying a 2-D image is made non-uniform. With the present embodiment, the high-polymer dispersion type liquid crystal layer 1440 diffuses the light, therefore, the brightness of the entire screen is basically uniform.

Because the horizontal cylindrical lens array for use with the present invention must be in alignment both with each light emitting unit 211 of the light source 200 and with each pixel of the image display device 400, a close dimensional tolerance is required for pitch and the like. For the liquid crystal cylindrical lens array 1400, which is used in the second embodiment, the photographical technology can be used to form a linear electrode 1411 on the transparent substrate, thus, the lenses can be arranged with the photographical accuracy, the horizontal cylindrical lens array being provided with a close tolerance, and the variation in preferred viewing distance, the cross talk, and the like being eliminated.

Especially, because one electrode is a surface electrode, the tolerance for relative position of the opposed electrodes is not critical, as contrasted with the disposition of linear electrodes in opposed positions, thus a close-tolerance lens array can be easily formed.

In addition, the liquid crystal cylindrical lens array 1400 has not only the function as a horizontal cylindrical lens array, but also the function as a diffusibility control means, which more simplifies the configuration, allowing the device to be made compact. Further, simply by applying or removing the voltage, the function as a horizontal cylindrical lens array and that as a diffuser can be switched over from one to the other, thus the image display can be easily changed over from 2-D to 3-D or vice versa.

Next, a third embodiment of the present invention will be described.

The third embodiment differs from the first embodiment in light source means. The light source means for use in the third embodiment is equipped with a sub light source in addition to the light emitting unit 211. Herein, the light emitting unit 211 and the sub light source are each configured as a self-luminous type light source.

The sub light source is a light source which is disposed in a portion of the unit light emitting block where no light emitting unit is disposed, such that the diffused light can be basically uniformly emitted from the region in the form of a matrix of q rows and q columns. For example, a sub light source is disposed in the gap between light emitting units 211 such that the light sources are disposed in the form of a lattice as a whole, or sub light sources are disposed such that the light sources including the light emitting units 211 are disposed with a uniform spacing to provide practically a planar light source.

When displaying a 3-D image, only the light emitting units 211 are lighted. To display a 2-D image, the sub light sources are lighted for radially emitting the light basically uniformly from the entire region of the unit light emitting block. This results in the light which passes through each pixel of the image display device 400 being not limited to that having a specific directivity, which provides a 2-D image display.

The light source means may be composed of a transmission type light source display device and a planar light source which illuminates this light source display device from the back. When displaying a 3-D image, a mask pattern which has openings only in the locations corresponding to the light emitting units 211 is displayed on the light source display device with the planar light source being lighted for operating it as a light source equivalent to the light source means 200 as mentioned in the first embodiment.

When displaying a 2-D image, the mask pattern to be displayed on the light source display device is set such that the diffused light is basically uniformly projected from the entire region of the unit light emitting block. By doing this, the planar light source can also function as the sub light sources. For example, when a normally white LCD is used as the transmission type light source display device, application of the voltage forms a mask to provide a 3-D image display, while removal of the voltage eliminates the mask for providing a 3-D image display. However, when displaying a 3-D image, the exposed area of the planar light source is reduced, compared to that when displaying a 2-D image, the luminosities of both must be balanced by taking such a measure as adjusting the brightness of the planar light source.

Next, a fourth embodiment of the present invention will be described.

With the fourth embodiment, each pixel of the image display device is composed of sub-pixels in the form of horizontal RGB stripes. On the light source side, each light emitting unit is provided with color filters in the form of horizontal RGB stripes such that, in the positions optically conjugate with the horizontal RGB stripes of the image display device, the same primary colors are disposed, or each light emitting unit is composed of light emitting sections in the form of horizontal RGB stripes such that, in the positions optically conjugate with the horizontal RGB stripes of the image display device, the same primary colors are disposed.

In an example as shown in FIG. 18, one light emitting unit 1810 is composed of light sources in the form of horizontal stripes arranged in the order of R, G, and B from top. Each pixel of the image display device 1820 is composed of three sub-pixels in the form of horizontal stripes arranged in the order of B, G, and R from top.

First, by constructing each pixel of the image display device 1820 with sub-pixels in the form of horizontal RGB stripes, the deviation in color balance for each pixel due to the difference in viewing angle is prevented. In other words, if each pixel is composed of sub-pixels in the form of vertical RGB stripes, vertical stripes is formed for each RGB in the observing region, because the light passing through each sub-pixel has a specific directivity in the horizontal direction, and thus, the difference in viewing angle from the observer produces a deviation in color balance for each pixel. On the other hand, if each pixel is composed of sub-pixels in the form of horizontal RGB stripes, the light which has passed through each sub-pixel diffuses in the vertical plane after passing through each sub-pixel, therefore any deviation in color balance is prevented.

In addition, the light emitting unit 1810 is composed of light sources in the form of horizontal RGB stripes such that, in the positions optically conjugate with the horizontal RGB stripes of the image display device, the same primary colors are disposed, therefore, any cross talk between parallax images resulting from a working error or an aberration can be suppressed.

When white light is projected from each light emitting unit, the light focused by the horizontal cylindrical lens is leaked into an adjacent pixel, resulting from a working error or an aberration, a mixture of the image information of the original pixel with that of the adjacent one is observed, which generates a cross talk between parallax images.

With the present embodiment, the light projected from the horizontal red (R) stripe of the light emitting unit 1810 is focused into the red sub-pixel of the image display device 1820 by the horizontal cylindrical lens 1830. In this case, if the red light is leaked into an adjacent sub-pixel due to an aberration or the like, the adjacent sub-pixel will not transmit the red light because it is green (G) or blue (B). In other words, an allowance corresponding to two sub-pixels is provided, thus, so long as an aberration or a working error large enough for the red light to reach the same color sub-pixel in the adjacent row is not caused, no cross talk between parallax images will be produced, and a sharp stereoscopic image can be displayed.

Next, a fifth embodiment of the present invention will be described.

As shown in FIG. 19, a 3-D image display unit according to the fifth embodiment of the present invention comprises a linear light source array 1910 in which linear light sources 1911 extending in the vertical direction are arranged in the horizontal direction with a prescribed spacing; a transmission type image display device 1920 which is located closer to the observer than the linear light source array 1910, and displays a synthetic image in the form of vertical stripes that is as a result of the parallax images which number corresponds to that of parallax directions being decomposed into vertical stripes, and the vertical stripes being alternately arranged in the prescribed order to be synthesized into one image; and a horizontal cylindrical lens array 1930 which is disposed between the linear light source array 1910 and the image display device 1920, having a generator in the horizontal direction.

Each linear light source 1911 of the linear light source array 1910 is configured by cyclically arranging the light emitting sections of the three primary colors of RGB in the vertical direction. Each pixel of the image display device 1920 is composed of sub-pixels in the form of horizontal RGB stripes. In addition, the light emitting sections of the primary colors of the linear light source array 1910 and the sub-pixels of the primary colors of the image display device 1920 are disposed such that the light emitting section and the sub-pixel of the same primary color are in the optically conjugate relationship with each other.

By this, as with the example as shown in FIG. 18, the light projected from the red (R) light emitting section of the linear light source array 1910 is focused into the sub-pixel of the R color on the display surface of the image display device 1920 by the horizontal cylindrical lens array 1930; the light projected from the green (G) light emitting section of the linear light source array 1910 is focused into the sub-pixel of the G color on the display surface of the image display device 1920; and the light projected from the blue (B) light emitting section of the linear light source array 1910 is focused into the sub-pixel of the B color on the display surface of the image display device 1920.

By doing this, almost all of the light projected from the light emitting section of a particular primary color is passed through the sub-pixel of the same primary color, thus, when compared to the system which uses a white light source 2011 in the form of vertical stripes, the light utilization efficiency can be increased to roughly three times. In other words, with the system as shown in FIG. 20, only the light which has reached a particular sub-pixel from the white light source, and which has the wavelength corresponding to the primary color of that sub-pixel is transmitted, therefore, the light utilization efficiency is lowered, but with the system as shown in FIG. 19, almost all of the light projected from each particular light emitting section is passed through the image display device 1920, thus the light can be utilized with a high efficiency.

By applying the fifth embodiment to a 3-D image display of the time sharing system, a 3-D image display unit which is substantially bright as compared to the conventional one can be configured. More particularly, by disposing the same linear light sources as those as shown in FIG. 19 more closely than in FIG. 19; causing them to blink in turn while always providing any two adjacent linear light sources which are lighted, with the same spacing as that as shown in FIG. 19; selecting the displaying pixels from the pixels of the image display device in synchronization with such sequential blinking to display the complementary parallax images in turn toward a specific direction for utilizing that those parallax images are observed as an integral parallax image due to the persistence effect, a 3-D image display unit which can display a highly fine and bright 3-D image can be configured.

Next, a sixth embodiment of the present invention will be described.

The sixth embodiment allows a color stereoscopic image to be displayed with no need for providing sub-pixels as shown in FIG. 18.

As shown in FIG. 22 (A), FIG. 22 (B), and FIG. 22 (C), on a light source means 2200 for the primary colors of RGB, light emitting units 2201, 2202, 2203 for the different primary colors are disposed such that they are not overlapped one upon another. On the light source means 200 as shown in FIG. 2, one light emitting unit 211 is disposed in each of the 3 partial regions each not belonging to the same row and the same column of a matrix of 3 rows and 3 columns (a region with a vertical dimension of Vs and a horizontal dimension of Hs), however, on the light source means 2200 as shown in FIG. 22 (A), FIG. 22 (B), and FIG. 22 (C), the light emitting units 2201, 2202, 2203 for the primary colors of RGB are disposed in each of the partial regions as shown in FIG. 2. A horizontal cylindrical lens 2210 is the same as that as shown in FIG. 2 and FIG. 18.

For displaying a color image, the light emitting units 2201, 2202, 2203 for the primary colors are caused to blink in turn such that they are not lighted simultaneously, and in synchronization with such sequential blinking, the images corresponding to the primary colors are displayed in turn on a transmission type image display device 2220. For example, as shown in FIG. 22 (A), FIG. 22 (B), and FIG. 22 (C), the light emitting units 2201, 2202, 2203 for the primary colors are lighted in turn such that the lighting in the order of R, G, and B is repeated.

While the light emitting unit 2201 for the R color is lighted, the image corresponding to the R color is displayed on the transmission type image display device 2220 as shown in FIG. 22 (A). Next, while the light emitting unit for the G color is lighted, the image corresponding to the G color is displayed on the transmission type image display device 2220 as shown in FIG. 22 (B). In this case, in correspondence to the difference in position between the light emitting unit 2201 for the R color and the light emitting unit 2202 for the G color, the position where the image of the G color is to be displayed on the transmission type image display device 2220 is changed. In FIG. 22 (B), the position of the light emitting unit 2202 for the G color is displaced one box toward right, compared to that for the R color, thus, in correspondence to this, the display position of the pixel belonging to the same parallax image is displaced one box toward right.

Next, while the light emitting unit for the B color is lighted, the image corresponding to the B color is displayed on the transmission type image display device 2220 as shown in FIG. 22 (C). In this case, in correspondence to the difference in position between the light emitting unit 2201 for the R color, the light emitting unit 2202 for the G color, and the light emitting unit 2203 for the B color, the position where the image of the B color is to be displayed on the transmission type image display device 2220 is changed. In FIG. 22 (C), the position of the light emitting unit 2203 for the B color is displaced further one box toward right, compared to that for the G color, thus, in correspondence to this, the display position of the pixel belonging to the same parallax image is displaced further one box toward right, compared to that for the G color.

Thus, in correspondence to that the light emitting units for the RGB colors vary in position, the display position of the pixel corresponding to a particular parallax image is changed, therefore, if the position of the light emitting unit varies with the color, the same parallax image can be observed from the same position in the observing region. Consequently, if the color of the emitted light is changed at a rate which allows the persistence effect to be given, and the display contents and the display position for the display device is changed in synchronization with the change in the color of the emitted light, the observer can observe a full color 3-D image as a result of synthesizing the 3-D images of the RGB primary colors.

With the full color display by the field sequential method, the need for providing sub-pixels is eliminated, thus the pixel density can be increased to three times, as compared to that for the conventional LCD. Especially when the field sequential method as stated in the present embodiment is employed, the light emitting energy per time $\times$ area can be decreased by the amount corresponding to the increase in the area of the light emitting unit that can be provided, which allows the service life of the light emitting device to be extended. FIG. 23 (A), FIG. 23 (B), FIG. 23 (C) and FIG. 23 (D) show various examples of disposition of the light emitting units for the primary colors when the full color display by the field sequential method is performed.

Next, a seventh embodiment of the present invention will be described.

With the seventh embodiment, a fly's eye lens or the like is used, which reduces the number of unit light emitting blocks required.

With the seventh embodiment, instead of using a horizontal cylindrical lens array, optical units which vertical and horizontal sections provide different lens functions are arranged in the form of a matrix to configure an image formation optical system 2430, and by the lens functions of this image formation optical system 2430, the image of the respective unit light emitting blocks comprising a plurality of light emitting units 2411 is formed on the display surface of an image display device 2420 as shown in FIG. 24 in the vertical section.

In the horizontal section, the image of the respective unit light emitting blocks is formed in the vicinity of the display surface of an image display device 2420 on the light source side (FIG. 25) or on the observer side (FIG. 26).

For example, it is assumed that, in the configuration using an image formation optical system 2430 comprising a toric lens array 2434 as shown in FIG. 24, FIG. 25, and FIG. 26, the vertical and horizontal dimensions of a unit light emitting block are Vs' and Hs', respectively; the vertical and horizontal dimensions of a unit display block are Vd' and Hd', respectively; the pitches of the lens arrays of the toric lens array in the vertical and horizontal dictions are Vc' and Hc'; the horizontal dimension of the image of the respective unit light emitting blocks in the horizontal section is Hs''; the distance between the respective unit light emitting blocks and the toric lens array is L1' ; the distance between the toric lens array and the display surface of the image display device is L2'; the distance between the display surface of the image display device and the prescribed observing position is L3'; the distance between the image of the respective unit light emitting blocks and the display surface of the image display device in the horizontal section is Lh'; and the focal lengths of the lens unit in the toric lens array in the vertical and horizontal sections are fv' and fh'.

Then, when, as shown in FIG. 25, the image of the respective unit light emitting blocks in the horizontal section is to be formed on the light source side with respect to the image display device, the entire optical system is established such that the following relational expressions are met:

$$1/fv' = 1/L1' + 1/L2'$$

$$1/fh' = 1/L1' + 1/(L2' - Lh')$$

$$Vs' : Vd' = L1' : L2'$$

$$Hs' : Hs'' = L1' : (L2' - Lh')$$

$$n/Vc' = 1/Vs' + 1/Vd'$$

$$n/Hc' = 1/Hs' + 1/Hs''$$

and

$$Hs'' : (q \times Hd') = (L3' + Lh') : L3'.$$

When, as shown in FIG. 26, the image of the respective unit light emitting blocks in the horizontal section is to be formed on the observer side with respect to the image display device, the entire optical system is established such that the following relational expressions are met:

$$1/fv' = 1/L1' + 1/L2'$$

$$1/fh' = 1/L1' + 1/(L2' + Lh')$$

$$Vs' : Vd' = L1' : L2'$$

$$Hs' : Hs'' = L1' : (L2' + Lh')$$

$$n/Vc' = 1/Vs' + 1/Vd'$$

$$n/Hc' = 1/Hs' + 1/Hs''$$

and

$$Hs'' : (q \times Hd') = (L3' - Lh') : L3'.$$

FIG. 24 to FIG. 26 and the above relational expressions can be applied as they are when a toric lens array is used. When the image of the respective unit light emitting blocks in the horizontal section is formed on the observer side with respect to the display surface of the image display device, the arrangement of the pixels for the respective parallax directions is in the order reverse to that of arrangement of the parallax images to be displayed in the observing region.

The image formation optical system 2430 is available in a variety of variants as shown in FIG. 31 (A), FIG. 31 (B), and FIG. 31 (C). FIG. 31 (A) shows a configuration which uses an image formation optical system comprising a combination of a vertical cylindrical lens array 2431 with a horizontal cylindrical lens array 2432. FIG. 31 (B) shows a configuration which uses an image formation optical system comprising a combination of a fly's eye lens plate 2433 with a horizontal cylindrical lens array 2432. FIG. 31 (C) shows a configuration which uses an image formation optical system comprising a toric lens array 2434.

The vertical cylindrical lens array 2431 as shown in FIG. 31 (A) and the horizontal cylindrical lens array 2432 as shown in FIG. 31 (B) each comprise convex cylindrical lenses, however, they may be configured as a cylindrical lens array comprising concave cylindrical lenses. The image of the unit light emitting block may be an erect image rather than an inverted image.

For example, a real image (an inverted image) of the unit light emitting block may be first formed by means of the fly's eye lens plate 2433, before an image of said real image (an erect image in the vertical section) being formed on the display surface of the image display device 2420 by means of the lens action of the horizontal cylindrical lens array 2432. In this case, the fly's eye lens plate 2433 serves to optically reduce the respective unit light emitting blocks.

Thus, by interposing an image formation optical system, a light source means can be configured with light emitting units whose number is substantially small, as compared to that of pixels for the image display device. For example, assuming that the magnitude of the image formation optical system in the vertical direction is 1/10, that in the horizontal direction is 1/20, and the number of parallax directions is 9, the number of light emitting units required is as small as approx. 1/1800 of that for the image display device.

And, if the number of light emitting units required is such a small one, an LED can be used as a light emitting unit. The LED has excellent characteristics of brightness, color development, and durability, and when it is used as a light emitting unit for the present embodiment, the light utilization efficiency given is substantially high, compared to that for a light emitting unit based on the planar light source and the mask substrate.

The above embodiments have been described on the assumption that q and r are integers of 2 or greater, however, q and r may be integers meeting q ≧ 2, r ≧ 1, and p = q × r, where p being the number of parallax directions. In other words, r may be equal to 1. FIG. 27 (A) and FIG. 27 (B) show an example of disposition of a unit light emitting block 2711 and that of a unit display block 2712 when q = 2 and r = 1, respectively. The white area in the figure shows a light emitting unit 2701, and the shaded area shows a non-light emitting unit, which does not project light. The boxes 2713 in FIG. 27 (B) each show a pixel. FIG. 28 (A) and FIG. 28 (B) show an example of disposition of a unit light emitting block 2811 and that of a unit display block 2812 when q = 2 and r = 2, respectively. Also in FIG. 28 (A), the white area in the figure shows a light emitting unit 2801, and the shaded area shows a non-light emitting unit, which does not project light, the respective boxes 2813 in FIG. 28 (B) showing a pixel.

The above embodiments have been described with a specification of that a light flux radially projected from one point on the light emitting unit in the unit light emitting block passes through the display surface of the image display device, being expanded to a breadth of at least p pixels in the horizontal section, and the light flux which has passed through the display surface, being expanded to the breadth of p pixels, reaches the observing region, being expanded from the left end to the right end thereof, however, this specification may not strictly be met.

In other words, as shown in FIG. 29, a light flux radially projected from the light emitting unit 2901 in the unit light emitting block may pass through the display surface of the image display device, 2902, being expanded to a breadth involving p pixels in the horizontal section. FIG. 29 provides an example when the number of parallax directions, p, is equal to 4, and as can be seen from the figure, the radiation which totals the radiations from the points on one light emitting unit may be expanded to a breadth involving 4 pixels.

In addition, if the state in which the light flux is not expanded strictly from the left end to the right end of the observing region, resulting in the image being blurred at the right and left ends of the observing region, is tolerated, the light flux may be expanded to a breadth which is wide to a certain degree, from the left side to the right side of the observing region.

Further, the embodiments have been described with a specification of that the vertical dimension and the horizontal dimension of the unit light emitting block, Vs and Hs, respectively; the vertical dimension and the horizontal dimension of the unit display block, Vd and Hd, respectively; the pitch for the horizontal cylindrical lens array, Vc; the distance between the light source means and the horizontal cylindrical lens array, L1; the distance between the horizontal cylindrical lens array and the display surface of the image display device, L2; the distance between the display surface of the image display device and a prescribed observing location, L3; and the focal length for the horizontal cylindrical lens array in the vertical section, fv, meet the following relational expressions:

$$1/fv = 1/L1 + 1/L2$$

$$Vs : Vd = L1 : L2$$

$$Vs : Vd = (L1 + L2 + L3) : L3$$

$$Vs : 2(Vc/n) = (L1 + L2 + L3) : (L2 + L3)$$

and

$$Hs : (q \times Hd) = (L1 + L2 + L3) : L3,$$

however, simply by establishing the optical system such that the following relational expressions are met, a good stereoscopic image can be observed:

$$1/fv = 1/L1 + 1/L2$$

$$Vs : Vd = L1 : L2$$

$$n/Vc = 1/Vs + 1/Vd$$

and

$$Hs : (q \times Hd) = (L1 + L2 + L3) : L3.$$

Here, the relational expression

$$n/Vc = 1/Vs + 1/Vd$$

can be proved as follows:
First, from the relational expression

$$Vs : Vd = L1 : L2,$$

relational expressions

$$(Vs/Vd) + 1 = (L1/L2) + 1$$

and

$$(Vs + Vd)/Vd = (L1 + L2)/L2 \qquad (1)$$

are obtained.
Next, noting the similarity of triangles in FIG. 30, a relational expression

$$Vs/Vc0 = (L1 + L2)/L2 \qquad (2)$$

is obtained.
Here, Vc0 can be expressed as

$$Vc0 = Vc/n.$$

From Eq. (1) and Eq. (2), relational expressions

$$Vs/Vc0 = (Vs + Vd)/Vd$$

$$1/Vc0 = (Vs + Vd)/(Vs \times Vd)$$

$$1/Vc0 = 1/Vs + 1/Vd$$

and

$$n/Vc = 1/Vs + 1/Vd$$

are obtained.
Thus, in place of the relational expressions

$$Vs : Vd = (L1 + L2 + L3) : L3$$

and

$$Vs : 2(Vc/n) = (L1 + L2 + L3) : (L2 + L3),$$

the following relational expression

$$n/Vc = 1/Vs + 1/Vd$$

may be met.
Further, with the first and second embodiments, the light source means 200 is composed of a mask substrate 201 having an opening in the location corresponding to the light emitting unit 211, and a planar light source 202 which irradiates the mask substrate 201 from the back thereof, however, each light emitting unit 211 on the light source means 200 may be composed of self-luminous type light emitting sections. Especially from the viewpoint of power saving and thickness reduction, it is recommended to use a self-luminous type FPD (flat panel display).
By the way, the light source used in the first and second embodiments may be any type of light source with which the light emitting section disposed in the predetermined position can always be lighted. The light source with which the light emitting condition is changed over from that for 3-D image display to that for 2-D image display or vice versa, as with the third embodiment, may be any type of light source with which the light emitting position can be changed over from that for 3-D image display to that for 2-D image display or vice versa, thus, as a self-luminous type FPD, it is not necessary to use a sophisticated light source with which the lighting position can be finely changed.
Therefore, the EL (electroluminecsence) panel, the VFD (fluorescent display tube), the LED (light emitting diode) panel, the PDP (plasma display), the FED (field emission display) and the like can be said to be candidates for the light source means 200. Among these candidates, the EL panel allows inexpensive configuring of an FPD which can always turn on the fine pattern of the RGB three primary colors over the entire screen, and thus if an EL panel with a high brightness that is suited for the present invention is developed, it can be considered that the EP panel will be the most suitable FPD for the present invention. Advantageously, the research and development of the high-brightness organic EL has been rapidly advanced in the recent years, and at the laboratory stage, a high-brightness planar light source which can be used with a color projector has already been realized (published on Sept. 22, 1998, as a joint research, by Toyota Central Laboratory and Seiko-Epson Substrate Technology Laboratory).
With the second and third embodiments, the entire screen is switch over from the 3-D image display to the 2-D image display or vice versa, however, one part of the screen may be for the 3-D image display and the other part may be for the 2-D image display. For example, by applying the voltage to only the linear electrodes which are in the region for displaying a 3-D image, of the linear electrodes 1411 as shown in FIG. 14, both the 3-D image display and the 2-D image display can be provided on the same screen. This is true also with a system in which the light emitting position is switched over, as with the third embodiment. More particularly, by mixing the region for lighting only the light emitting units with that for lighting also the sub light sources, both the 3-D image display and the 2-D image display can be provided on the same screen.

Further, with the second embodiment, light diffusion for displaying a 2-D image display is performed by the high-polymer dispersion type liquid crystal layer 1440, however, a device which functions as a diffusibility control means to allow selection of either the transmission condition or the diffusion one may be separately disposed. The diffusibility control means can be disposed in any location between the light source means 200 and the vicinity of the display surface of the image display device 400 on the observer side.

For the image display device (LCD), which is one of the major components used for the present invention, an existing production facility can be utilized practically as it is. The only difference from the existing LCD is that the color filters for the RGB three primary colors are arranged in the form of horizontal stripes rather than in the form of vertical ones. In the future, use of an image display device which is manufactured by laminating a liquid crystal lens array and a self-luminous type device on the LCD, and standardized as an all-in-one 3D-FPD can be expected.

FIG. 1, FIG. 7, and FIG. 8 show an optical system when n = 2, however, by setting n at a value of 1, or a value equal to or greater than 3, the pitch Vc for the cylindrical lens array 300 may be decreased or increased. FIG. 21 (A), FIG. 21 (B), FIG. 21 (C), and FIG. 21 (D) show an optical system when n = 1, 2, 3, and 4, respectively. As shown in these figures, the pitch Vc for the horizontal cylindrical lens array 300 can be freely selected, provided that the light emitting unit and the pixel are in the prescribed conjugate relationship.

INDUSTRIAL APPLICABILITY

With the 3-D image displaying method according to the present invention and a 3-D image display unit using it, parallax images which number corresponds to that of parallax directions are displayed by the pixel arrangement in the form of a matrix, thus when displaying a multi-viewpoint 3-D image, an extreme unbalance of the pixel densities in the vertical and horizontal directions as is encountered with the conventional lenticular system, which provides a display by the pixel arrangement in the form of stripes, and the parallax barrier system will not occur. Especially by setting the pixel densities in the vertical and horizontal directions for parallax images at the same value, 2-D image information which amount corresponds to the number of parallax directions on the dot matrix generated by the normal image pickup device or rendering software can be synthesized with a high efficiency on the display device.

In that case, the pixel pitch for the parallax images to that for the display device is not multiplied by the number of parallax directions as with the lenticular system and the parallax barrier system, but is multiplied by the root of the number of parallax directions at maximum, therefore, the deterioration of the resolution can be minimized. In addition, a stereoscopic image can be displayed by means of only the light source, horizontal cylindrical lens array, and image display device, the configuration of the apparatus can be extremely simplified. Consequently by using the 3-D image displaying method according to the present invention, a 3-D image display with which the number of parallax directions is extremely large, as with the 64-eye 3-D image display and the 100-eye one, can be realized with an inexpensive configuration.

In addition, because the liquid crystal cylindrical lens array, which allows the tolerance for lens pitch to be met with ease, is adopted, variation in preferred viewing distance, cross talk, and the like can be suppressed. Further, the system which uses a diffusibility control means, such as a high-polymer dispersion type liquid crystal layer, to change over from the transmission condition to the diffusion one or vice versa, can easily and inexpensively select the 3-D image display, the 2-D image display, which uses the full resolution of the display device, or the display with which a 2-D image and a 3-D image are intermixed. Especially with the system in which the diffusibility control means and the liquid crystal cylindrical array are integrated, the configuration is more simplified, which allows the size to be reduced.

In addition, with the system in which a sub light source is disposed in a portion of the respective unit light emitting blocks where no light emitting unit is disposed, lighting only the light emitting units provides a 3-D image display, while lighting also the sub light sources provides a 2-D image display, thus, selection of the 3-D image display, the 2-D image display, or the display with which a 2-D image and a 3-D image are intermixed can easily be performed.

Especially with the system in which the light source means is composed of a mask substrate having an opening in the location corresponding to the light emitting unit, and a planar light source which irradiates the mask substrate from the back thereof, or each light emitting unit is composed of self-luminous type light emitting sections, the thickness of the light source can be reduced. Further, with the system in which the light source means is composed of a transmission type light source display device and a planar light source which illuminates this light source display device from the back, selection of the 3-D image display, the 2-D image display, or the display with which a 2-D image and a 3-D image are intermixed can easily be performed simply by changing the mask pattern to be displayed.

With the system in which each pixel of the image display device is composed of sub-pixels in the form of horizontal RGB stripes, the deviation in color balance for each pixel due to the difference in viewing angle is prevented. In addition, with the system in which color filters in the form of horizontal RGB stripes or light emitting sections in the form of horizontal RGB stripes are provided for each light emitting unit on the light source means such that, in the positions optically conjugate with the horizontal RGB stripes of the image display device, the same primary colors are disposed, any cross talk between parallax images resulting from a working error or an aberration can be suppressed, and a sharp stereoscopic image can be displayed. Especially with the system which is constructed by using light emitting sections in the form of horizontal RGB, the light can be utilized with no waste.

Further, with the system in which, on the light source means for the primary colors of RGB, the light emitting units for the different primary colors are disposed such that they are not overlapped one upon another; the light source means for the primary colors are caused to blink in turn such that they are not lighted simultaneously; and in synchronization with such sequential blinking, the images corresponding to the primary colors are displayed in turn on the transmission type image display device, the persistence effect allows the observer to observe a full color 3-D image which is as a result of synthesizing the 3-D images of the RGB primary colors.

In addition, the R, G, and B colors are displayed by time sharing with a single pixel, thus, compared to the system in which each pixel is divided into three sub-pixels of RGB, the pixel density can be tripled. Further, there is no need for dividing one light emitting unit into light emitting sections of RGB, thus, the light emitting energy per time $\times$ area can be decreased by the amount corresponding to the increase in the area of the light emitting unit that can be provided for each color, which allows the service life of the light emitting device to be extended.

With the system in which the lens action in the image formation optical system forms the image of the respective unit light emitting blocks on the display surface of the image display device in the vertical section, and forms the image of the respective unit light emitting blocks in the vicinity of the display surface of the image display device on the light source side or the observer side in the horizontal section, the light source means can be composed of light emitting units which number is substantially small, as compared to the number of pixels for the image display device, which allows using an LED with excellent characteristics of brightness, color development, and durability as the light emitting unit.

**Claims**

1. A 3-D image displaying method for displaying, toward a prescribed observing region, a stereoscopic image giving only horizontal parallaxes and no vertical ones, wherein,

assuming that the number of parallax directions is p, and q and r are integers of 2 or greater that meet a relational expression, p = q × r,

the method comprises a light source means (200) on which a plurality of unit light emitting blocks (210) are arranged in the form of a matrix, each having light emitting units (211) each disposed in respective q partial regions belonging to mutually different rows and mutually different columns of a matrix of q rows and q columns; a horizontal cylindrical lens array (300) having a generator in the horizontal direction; and a transmission type image display device (400),

on said transmission type image display device (400), a synthetic image in which parallax images which number corresponds to that of parallax directions are synthesized by arranging, in the form of a matrix, a plurality of unit display blocks (410, 510) in which p pixels in total are disposed in the form of a matrix of q rows and r columns in the prescribed order, each pixel being taken one by one from approximately the same portions of p parallax image screens giving different parallaxes, and which are of q types different in arrangement pattern of p pixels; and in each row of which the p pixels giving different parallaxes are disposed such that they are repetitively arranged in the order of arrangement of the parallax images to be displayed in said observing region is displayed,

a light flux radially projected from one point on said light emitting unit (211) in said unit light emitting block (210) passes through the display surface of the image display device (400), being expanded to a breadth of at least p pixels in the horizontal section, and the light flux which has passed through said display surface reaches said observing region, being expanded from the left end to the right end thereof, and in the vertical section, being roughly focused every (n × q) pixels (where n is an integer of 1 or greater) on the display surface of said image display device (400) by the lens function of said horizontal cylindrical lens array (300), and after passing through the image display device (400), traveling such that it is diffused in the vertical plane, which results in formation of an observing region where a different horizontal parallax image is observed in each of vertical zones which are adjacent to one another.

2. A 3-D image displaying method for displaying, toward a prescribed observing region, a stereoscopic image giving only horizontal parallaxes and no vertical ones, wherein,

assuming that the number of parallax directions is p, and q and r are integers that meet relational expressions, q ≧ 2, r ≧ 1, and p = q × r,

the method comprises a light source means (200) on which a plurality of unit light emitting blocks (210) are arranged in the form of a matrix, each having light emitting units (211) each disposed in respective q partial regions belonging to mutually different rows and mutually different columns of a matrix of q rows and q columns; a horizontal cylindrical lens array (300) having a generator in the horizontal direction; and a transmission type image display device (400),

on said transmission type image display device (400), a synthetic image in which parallax images which number corresponds to that of parallax directions are synthesized by arranging, in the form of a matrix, a plurality of unit display blocks (410, 510) in which p pixels in total are disposed in the form of a matrix of q rows and r columns in the prescribed order, each pixel being taken one by one from approximately the same portions of p parallax image screens giving different parallaxes, and which are of q types different in arrangement pattern of p pixels; and in each row of which the p pixels belonging to different parallax images are disposed such that they are repetitively arranged in the order of arrangement of the parallax images to be displayed in said observing region is displayed,

a light flux radially projected from said light emitting unit (211) in said unit light emitting block (210) passes through the display surface of the image display device (400), being expanded to a breadth involving at least p pixels in the horizontal section, and the light flux which has passed through said display surface reaches said observing region, being expanded from the left side to the right side thereof, and in the vertical section, being roughly focused every $(n \times q)$ pixels (where n is an integer of 1 or greater) on the display surface of said image display device (400) by the lens function of said horizontal cylindrical lens array (300), and after passing through the image display device (400), traveling such that it is diffused in the vertical plane, which results in formation of an observing region where a different horizontal parallax image is observed in each of vertical zones which are adjacent to one another.

3. A 3-D image displaying method as claimed in claim 1 or claim 2, wherein, if the vertical dimension and the horizontal dimension of said unit light emitting block (210) are Vs and Hs, respectively; the vertical dimension and the horizontal dimension of said unit display block (410, 510) are Vd and Hd, respectively; the pitch for said horizontal cylindrical lens array (300) is Vc; the distance between said light source means (200) and said horizontal cylindrical lens array (300) is L1; the distance between said horizontal cylindrical lens array (300) and the display surface of said image display device (400) is L2; the distance between the display surface of said image display device (400) and a prescribed observing location is L3; and the focal length for said horizontal cylindrical lens array (300) in the vertical section is fv, the following relational expressions are met:

$$1/fv = 1/L1 + 1/L2$$

$$Vs : Vd = L1 : L2$$

$$Vs : Vd = (L1 + L2 + L3) : L3$$

$$Vs : 2(Vc/n) = (L1 + L2 + L3) : (L2 + L3),$$

and

$$Hs : (q \times Hd) = (L1 + L2 + L3) : L3.$$

4. A 3-D image displaying method as claimed in claim 1 or claim 2, wherein, if the vertical dimension and the horizontal dimension of said unit light emitting block (210) are Vs and Hs, respectively; the vertical dimension and the horizontal dimension of said unit display block (410, 510) are Vd and Hd, respectively; the pitch for said horizontal cylindrical lens array (300) is Vc; the distance between said light source means (200) and said horizontal cylindrical lens array (300) is L1; the distance between said horizontal cylindrical lens array (300) and the display surface of said image display device (400) is L2; the distance between the display surface of said image display device (400) and a prescribed observing location is L3; and the focal length for said horizontal cylindrical lens array (300) in the vertical section is fv, the following relational expressions are met:

$$1/fv = 1/L1 + 1/L2$$

$$Vs : Vd = L1 : L2$$

$$n/Vc = 1/Vs + 1/Vd,$$

and

$$Hs : (q \times Hd) = (L1 + L2 + L3) : L3.$$

5. A 3-D image displaying method as claimed in claim 1, claim 2, claim 3, or claim 4, wherein said horizontal cylindrical lens array (300) is that which is constructed such that a liquid crystal layer (1430) is disposed between a pair of electrode-equipped transparent substrates (1410, 1420),

electrodes formed on the electrode-equipped transparent substrate (1410) of at least one of said pair of electrode-equipped transparent substrates (1410, 1420) provide a linear electrode array consisting of a plurality of linear electrodes (1411) which extend in the horizontal direction, and are arranged in the vertical direction at a prescribed interval, and

by applying a prescribed potential across the electrodes of said pair of electrode-equipped transparent substrates (1410, 1420), said liquid crystal layer (1430) is provided with a lens function.

6. A 3-D image displaying method as claimed in claim 1, claim 2, claim 3, claim 4, or claim 5, wherein a diffusibility control means (1440) which allows selection from the two conditions, i.e., the transmission condition and the diffusion one is provided between said light source means (200) and the vicinity of the display surface of the image display device (400) on the observer side, and

by using said diffusibility control means (1440) for selection from said two conditions with said light source means (200) being lighted, either the 3-D image display or the 2-D image one is selected.

7. A 3-D image displaying method as claimed in claim 1, claim 2, claim 3, claim 4, claim 5, or claim 6, wherein said horizontal cylindrical lens array is constructed such that a liquid crystal layer (1430) and a high-polymer dispersion type liquid crystal layer (1440) are laminated between a pair of electrode-equipped transparent substrates (1410, 1420),

electrodes formed on the transparent substrate of said pair of electrode-equipped transparent substrates (1410, 1420) that is contacted with the liquid crystal lens for liquid crystal layer, (1430), provide a linear electrode array consisting of a plurality of linear electrodes (1411) which extend in the horizontal direction, and are arranged in the vertical direction at a prescribed interval,

an electrode formed on the other transparent substrate which is contacted with said high-polymer dispersion type liquid crystal layer (1440) provides a transparent surface electrode (1421),

when displaying a 3-D image, a voltage is applied across said linear electrode (1411) and said transparent surface electrode (1421) for providing a lens function for said liquid crystal layer (1430) and making said high-polymer dispersion type liquid crystal layer (1440) transparent,

when displaying a 2-D image, no voltage is applied across said linear electrode (1411) and said transparent surface electrode (1421) for providing said high-polymer dispersion type liquid crystal layer (1440) with a function to diffuse the light.

8. A 3-D image displaying method as claimed in claim 7, wherein, by applying a voltage only across a part of said linear electrodes (1411) and said transparent surface electrode (1421), the 2-D image display and the 3-D image display are intermixed.

9. A 3-D image displaying method as claimed in claim 1, claim 2, claim 3, claim 4, or claim 5, wherein a prescribed sub light source is disposed in a portion of said unit light emitting block (210) where said light emitting unit (211) is not disposed, such that the diffused light can be basically uniformly emitted from said region in the form of a matrix of q rows and q columns,

when displaying a 3-D image, only said light emitting unit (211) is lighted, and

when displaying a 2-D image, said sub light source is lighted such that the light is radially projected from the entire region of said unit light emitting block (210) basically uniformly.

10. A 3-D image displaying method as claimed in claim 1, claim 2, claim 3, claim 4, claim 5, claim 6, claim 7, claim 8, or claim 9, wherein said light source means (200) is composed of a mask substrate (201) having an opening in the location corresponding to said light emitting unit (211), and a planar light source (202) which irradiates said mask substrate (201) from the back thereof.

11. A 3-D image displaying method as claimed in claim 1, claim 2, claim 3, claim 4, claim 5, claim 6, claim 7, claim 8, or claim 9, wherein said light emitting unit (211) on said light source means (200) is composed of self-luminous type light emitting sections.

12. A 3-D image displaying method as claimed in claim 9, wherein said light source means is composed of a transmission type light source display device and a planar light source which illuminates said light source display device from the back thereof,

when displaying a 3-D image, a mask pattern which has openings only in the locations corresponding to said light emitting units (211) is displayed on said light source display device, said planar light source being caused to function as said light emitting units (211),

when displaying a 2-D image, said mask pattern to be displayed on said light source display device is set such that the diffused light is basically uniformly projected from the entire region of said unit light emitting block (210), whereby said planar light source is caused to function also as said sub light source.

13. A 3-D image displaying method as claimed in claim 9, wherein said sub light source is composed of self-luminous type light emitting sections.

14. A 3-D image displaying method as claimed in claim 9, claim 12, or claim 13, wherein, by lighting a part of said sub light sources, intermixing display of a 2-D image and a 3-D image is performed.

15. A 3-D image displaying method as claimed in claim 1, claim 2, claim 3, claim 4, claim 5, claim 6, claim 7, claim 8, claim 9, claim 10, claim 11, claim 12, claim 13, or claim 14, wherein, by constructing each pixel of said image display device (1820) with sub-pixels in the form of horizontal RGB stripes, the deviation in color balance for each pixel due to the difference in viewing angle is suppressed, and

by dividing the light emitting unit (1810) to be used for 3-D image display on said light source means into light emitting sections of the primary colors with color filters in the form of horizontal RGB stripes or light emitting sections in the form of horizontal RGB stripes, and

disposing the light emitting sections of the primary colors on said light source means and the sub-pixels of the primary colors of said image display device (1820) such that the light emitting section and the sub-pixel of the same primary color are in the optically conjugate relationship with each other, any cross talk between parallax images resulting from a working error or an aberration is suppressed.

16. A 3-D image displaying method as claimed in claim 1, claim 2, claim 3, claim 4, claim 5, claim 6, claim 7, claim 8, claim 9, claim 10, claim 11, claim 12, claim 13, or claim 14, wherein the light source means for the primary colors of RGB, (2200, 2201 to 2203), are disposed such that the light emitting units for the different primary colors, (2201 to 2203), are not overlapped one upon another,

the light source means for the primary colors, (2201 to 2203), are caused to blink in turn such that they are not lighted simultaneously; in synchronization with such sequential blinking, the images corresponding to the primary colors are displayed in turn on said transmission type image display device (2220), and the persistence effect allows the observer to observe a full color 3-D image which is as a result of synthesizing the 3-D images of the RGB primary colors.

17. A 3-D image displaying method for displaying, toward a prescribed observing region, a stereoscopic image giving only horizontal parallaxes and no vertical ones, by means of a linear light source array (1910) in which linear light sources (1911) extending in the vertical direction are arranged in the horizontal direction with a prescribed spacing; and a transmission type image display device (1920) which is located closer to the observer than said linear light source array (1910), and displays a synthetic image in the form of vertical stripes that is as a result of the parallax images which number corresponds to that of parallax directions being decomposed into vertical stripes, and the vertical stripes being alternately arranged in the prescribed order to be synthesized into one image, wherein

by configuring each of said linear light sources (1911) by cyclically arranging the light emitting sections of the three primary colors of RGB in the vertical direction,

constructing each pixel of said image display device (1920) with sub-pixels in the form of horizontal RGB stripes,

disposing a horizontal cylindrical lens array (1930) having a generator in the horizontal direction between said linear light source array (1910) and said image display device (1920), and

disposing the light emitting sections of the primary colors of said linear light source array (1910) and the sub-pixels of the primary colors of said image display device (1920) such that the light emitting section and the sub-pixel of the same primary color are in the optically conjugate relationship with each other, the utilization efficiency for the light emitted from said linear light source array (1910) is increased.

18. A 3-D image displaying method as claimed in claim 1, claim 2, claim 3, claim 4, claim 5, claim 6, claim 7, or claim 8, wherein an image formation optical system (2430) in which, instead of using said horizontal cylindrical lens array, optical units which vertical and horizontal sections provide different lens functions are arranged in the form of a matrix is provided; by the lens functions of said image formation optical system (2430), the image of said respective unit light emitting blocks is formed on the display surface of said image display device (2420) in the vertical section; and in the horizontal section, the image of said respective unit light emitting blocks is formed in the vicinity of the display surface of said image display device (2420) on the light source side or on the observer side.

19. A 3-D image displaying method as claimed in claim 18, wherein said image formation optical system comprises a combination of a vertical cylindrical lens array (2431) composed of cylindrical lenses having a generator in the vertical direction, with a horizontal cylindrical lens array (2432) composed of cylindrical lenses having a generator in the horizontal direction,

or comprises a combination of a fly's eye lens plate (2433) with said vertical cylindrical lens array (2431) or said horizontal cylindrical lens array (2432),

or comprises a toric lens array (2434).

20. A 3-D image display unit, wherein the method as claimed in claim 1, claim 2, claim 3, claim 4, claim 5, claim 6, claim 7, claim 8, claim 9, claim 10, claim 11, claim 12, claim 13, claim 14, claim 15, claim 16, claim 17, claim 18, or claim 19 is used.

# FIG. 1

# FIG. 2

# F I G. 3

300b          300b

V c

# FIG. 4

# FIG. 5

# FIG. 6

EP 1 248 473 A1

# FIG. 7

36

# FIG. 8

# FIG. 9

FIG. 10

# FIG. 11 (A)

1101  1102  1103  1104

# FIG. 11 (B)

1110

# FIG. 11 (C)

## F I G. 1 2 (A)

## F I G. 1 2 (B)

## F I G. 1 2 (C)

# F I G. 13

FIG. 14

# FIG. 15

# FIG. 16

# FIG. 17

200            1400           400

# FIG. 18

# FIG. 19

# F I G. 20

# FIG. 21 (A)

# FIG. 21 (B)

# FIG. 21 (C)

# FIG. 21 (D)

# F I G. 22 (A)

# F I G. 22 (B)

# F I G. 22 (C)

# FIG. 23 (A)

# FIG. 23 (B)

# FIG. 23 (C)

# FIG. 23 (D)

# F I G. 24

# FIG. 25

# FIG. 26

# FIG. 27 (A)

2711

2701

# FIG. 27 (B)

2712

| 1 | 2 | 1 | 2 | 1 | 2 |
|---|---|---|---|---|---|
| 2 | 1 | 2 | 1 | 2 | 1 |
| 1 | 2 | 1 | 2 | 1 | 2 |
| 2 | 1 | 2 | 1 | 2 | 1 |
| 1 | 2 | 1 | 2 | 1 | 2 |
| 2 | 1 | 2 | 1 | 2 | 1 |

2713

## F I G. 28 (A)

2811

2801

## F I G. 28 (B)

2812

2813

| 1 | 2 | 3 | 4 | 1 | 2 |
|---|---|---|---|---|---|
| 3 | 4 | 1 | 2 | 3 | 4 |
| 1 | 2 | 3 | 4 | 1 | 2 |
| 3 | 4 | 1 | 2 | 3 | 4 |
| 1 | 2 | 3 | 4 | 1 | 2 |
| 3 | 4 | 1 | 2 | 3 | 4 |

# F I G. 29

P = 4

2901

2902

# FIG. 30

FIG. 31 (A)

2400 2430 2431 2432 2420

FIG. 31 (B)

2400 2430 2433 2432 2420

FIG. 31 (C)

2400 2430 2434 2420

## INTERNATIONAL SEARCH REPORT

| International application No. |
|---|
| PCT/JP00/08003 |

**A. CLASSIFICATION OF SUBJECT MATTER**
Int.Cl$^7$  H04N13/04, G02B27/22, G09F9/00, 9/30

According to International Patent Classification (IPC) or to both national classification and IPC

**B. FIELDS SEARCHED**

Minimum documentation searched (classification system followed by classification symbols)
Int.Cl$^7$  H04N13/04, G02B27/22, G09F9/00, 9/30

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| E,A | JP, 11-326828, A (MR System Kenkyusho K.K.), 26 November, 1999 (26.11.99)  (Family: none) | 1-20 |
| A | JP, 11-194300, A (MR System Kenkyusho K.K.), 21 July, 1999 (21.07.99)  (Family: none) | 1-20 |
| A | JP, 9-318911, A (Canon Inc.), 12 December, 1997 (12.12.97)  (Family: none) | 1-20 |
| A | JP, 9-311294, A (Canon Inc.), 02 December, 1997 (02.12.97) & EP, 788008, A | 1-20 |
| A | JP, 8-505014, A (Dimension Technologies Inc.), 28 May, 1996 (28.05.96) & WO, 94/06249, A  & US, 5349379, A & US, 5410345, A   & US, 5428366, A & EP, 659324, A | 1-20 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 February, 2001 (01.02.01) | 13 February, 2001 (13.02.01) |

| Name and mailing address of the ISA/ | Authorized officer |
|---|---|
| Japanese Patent Office | |
| Facsimile No. | Telephone No. |

Form PCT/ISA/210 (second sheet) (July 1992)